# EUROPEAN PATENT APPLICATION

(11) **EP 4 733 998 A1**
(43) Date of publication of application: **29.04.2026**
(21) Application number: 25154282.5
(22) Date of filing: 27.01.2025
(51) Int. Cl.: G06N 3/0475, G06N 5/022

(54) **METHOD AND SYSTEM FOR GENERATING TARGET CONCEPT-BASED KNOWLEDGE GRAPHS**

(30) Priority: 22.10.2024 IN 202441080094
(71) Applicant: Wipro Limited, 560 035 Karnataka (IN)
(72) Inventor: Hore, Prodip, Bangalore (IN)
(74) Representative: Finnegan Europe LLP

(57) **Abstract**

A method for generating target concept-based knowledge graphs is disclosed. The method includes receiving, via a GUI, input data from a user device. The method further includes generating a factor-category list includes a plurality of factors, each associated with one of a set of categories, based on the input data using a Large Language Model (LLM). The method further includes creating a plurality of target concept embeddings from the input data and the factor-category list using an embedding model. The method further includes identifying a relevant set of a plurality of domain embeddings from a Retrieval Augmented Generation (RAG) model based on a similarity analysis of the plurality of target concept embeddings with the plurality of domain embeddings. The method further includes providing a knowledge graph generation prompt to the LLM. The method further includes recursively generating a knowledge graph based on the knowledge graph generation prompt, using the LLM.

## Description

### Technical Field

This disclosure relates generally to Large Language Models (LLMs), and more particularly to method and system for generating target concept-based knowledge graphs.

### Background

Large Language Models (LLMs) are gaining increasing popularity in various industries (such as healthcare, finance, entertainment, education, and the like) owing to their unprecedented performance in various applications. LLMs are trained using billions of parameters and huge datasets. Based on the training, the LLMs are capable of providing responses to user queries. Retrieval Augmented Generation (RAG) is a technique used to improve the quality of responses generated by the LLMs. However, the traditional RAG may fail to comprehend and address complex relationships between entities and concepts, particularly those involving intricate structures. Using RAG, it may be difficult to generate responses for those user queries which involves exploiting deeper structure in the data involving the entities and the relationships.

In the present state of art, techniques for generating knowledge graph based on the user query exist. However, the existing techniques fail to provide target concept-based knowledge graph generation. Additionally, the existing techniques fail to provide a method for creating a knowledge graph around the target concept with different depth of the graphs. Further, the existing techniques fail to provide a knowledge graph bot that utilizes structure in the knowledge graph to prove better meaningful responses to the users. The existing techniques may not use RAG to extract the information from the knowledge graph nodes and foundation models for a summary or user query responses.

Further, the existing techniques fail to provide a dynamic ontology for input processing, based on a recursive algorithm, created based on input data and relation associated with the target concept in each level of the graph. The existing techniques may provide a method for knowledge graph creation but may fail to generate a knowledge graph based on a fixed target concept while creating the entire knowledge graph and the dynamic ontology in place at each level of the knowledge graph. Thus, such knowledge graph construction may not be temporal with the fixed target concept.

Additionally, the existing techniques may not use few shot learning approaches with chain of thoughts to extract the right content from the LLMs. Further, the existing techniques fail to incorporate prompt and the chain of thoughts to establish the relationships of each node in each level. Additionally, such techniques fail to establish the dependency and arriving at granular level information to extract from nodes using the RAG, LLMs, and the recursive algorithm to build multi-layer of a network. Moreover, the existing techniques may not have temporal knowledge graphs built to understand the deeper interferences with respect to the factors influences and the change of target concepts contextually with respect to its dependent nodes of each level. The existing techniques fail to pull out deeper information stored in the nodes by leveraging LLMs and the RAG to get the summary of those nodes.

The present invention is directed to overcome one or more limitations stated above or any limitations associated with the known arts.

### SUMMARY

In one embodiment, a method for generating target concept-based knowledge graphs is disclosed. In one example, the method may include receiving, via a Graphical User Interface (GUI), input data from a user device. It should be noted that the input data may include a target concept, and a set of target concept parameters. The method may further include generating a factor-category list. The factor-category list may include a plurality of factors, each associated with the one of a set of categories, based on the input data using a Large Language Model (LLM). The method may further include creating a plurality of target concept embeddings from the input data and the factor-category list using an embedding model. The method may further include identifying a relevant set of a plurality of domain embeddings from a Retrieval Augmented Generation (RAG) model based on a similarity analysis of the plurality of target concept embeddings with the plurality of domain embeddings. The method may further include providing a knowledge graph generation prompt to the LLM. It should be noted that the knowledge graph generation prompt may include the input data, the factor-category list, the relevant set of the plurality of domain embeddings, a set of predefined knowledge graph parameters, and a set of LLM instructions. The method may further include recursively generating a knowledge graph based on the knowledge graph generation prompt, using the LLM. It should be noted that the knowledge graph may include a plurality of nodes and a plurality of edges. Each of the plurality of nodes corresponds to one of an event or a sub-event and is associated with one of the set of categories. Each of the plurality of edges corresponds to a relationship type between two of the plurality of nodes.

In another embodiment, a system for generating target concept-based knowledge graphs is disclosed. In one example, the system may include a processor and a computer-readable medium communicatively coupled to the processor. The computer-readable medium may store processor-executable instructions, which, on execution, may cause the processor to receive, via a GUI, input data from a user device. It should be noted that the input data may include a target concept, and a set of target concept parameters. The processor-executable instructions, on execution, may further cause the processor to generate a factor-category list. The factor-category list may include a plurality of factors, each associated with one of a set of categories, based on the input data using a Large Language Model (LLM). The processor-executable instructions, on execution, may further cause the processor to create a plurality of target concept embeddings from the input data and the factor-category list using an embedding model. The processor-executable instructions, on execution, may further cause the processor to identify a relevant set of a plurality of domain embeddings from a Retrieval Augmented Generation (RAG) model based on a similarity analysis of the plurality of target concept embeddings with the plurality of domain embeddings. The processor-executable instructions, on execution, may further cause the processor to provide a knowledge graph generation prompt to the LLM. It should be noted that the knowledge graph generation prompt may include the input data, the factor-category list, the relevant set of the plurality of domain embeddings, a set of predefined knowledge graph parameters, and a set of LLM instructions. The processor-executable instructions, on execution, may further cause the processor to recursively generate a knowledge graph based on the knowledge graph generation prompt, using the LLM. It should be noted that the knowledge graph may include a plurality of nodes and a plurality of edges. Each of the plurality of nodes corresponds to one of an event or a sub-event and is associated with one of the set of categories. Each of the plurality of edges corresponds to a relationship type between two of the plurality of nodes.

In yet another embodiment, a non-transitory computer-readable medium storing computer-executable instruction for generating target concept-based knowledge graphs is disclosed. In one example, the stored instructions, when executed by a processor, may cause the processor to perform operations including receiving, via a GUI, input data from a user device. It should be noted that the input data may include a target concept, and a set of target concept parameters. The operations may further include generating a factor-category list comprising a plurality of factors, each associated with one of a set of categories, based on the input data using a Large Language Model (LLM). The operations may further include creating a plurality of target concept embeddings from the input data and the factor-category list using an embedding model. The operations may further include identifying a relevant set of a plurality of domain embeddings from a Retrieval Augmented Generation (RAG) model based on a similarity analysis of the plurality of target concept embeddings with the plurality of domain embeddings. The operations may further include providing a knowledge graph generation prompt to the LLM. It should be noted that the knowledge graph generation prompt may include the input data, the factor-category list, the relevant set of the plurality of domain embeddings, a set of predefined knowledge graph parameters, and a set of LLM instructions. The operations may further include recursively generating a knowledge graph based on the knowledge graph generation prompt, using the LLM. It should be noted that the knowledge graph may include a plurality of nodes and a plurality of edges. Each of the plurality of nodes corresponds to one of an event or a sub-event and is associated with one of the set of categories. Each of the plurality of edges corresponds to a relationship type between two of the plurality of nodes.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for generating target concept-based knowledge graphs, in accordance with some embodiments of the present disclosure.
**FIG. 2** illustrates a functional block diagram of a system for generating target concept-based knowledge graphs, in accordance with some embodiments of the present disclosure.
**FIG. 3** illustrates a functional block diagram of another system for generating target concept-based knowledge graphs, in accordance with some embodiments of the present disclosure.
**FIG. 4** illustrates a flow diagram of an exemplary process for generating target concept-based knowledge graphs, in accordance with some embodiments of the present disclosure.
**FIG. 5** illustrates a flow diagram of an exemplary process for recursively generating a knowledge graph, in accordance with some embodiments of the present disclosure.
**FIG. 6** illustrates a flow diagram of an exemplary process for generating a response to a user query through a knowledge graph bot, in accordance with some embodiments of the present disclosure.
**FIG. 7** illustrates a flow diagram of a detailed exemplary process for generating target concept-based knowledge graphs, in accordance with some embodiments of the present disclosure.
**FIG. 8** illustrates a flow diagram of another detailed exemplary process for generating target concept-based knowledge graphs, in accordance with some embodiments of the present disclosure.
**FIG. 9** illustrates a representation of an exemplary knowledge graph, in accordance with some embodiments of the present disclosure.
**FIG. 10** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

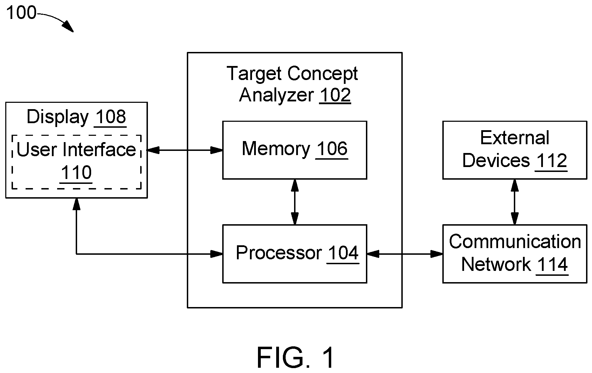

Referring now to FIG. 1, an exemplary system 100 for generating target concept-based knowledge graphs is illustrated, in accordance with some embodiments of the present disclosure. The system 100 may include a target concept analyzer 102. The target concept analyzer 102 may be, for example, but may not be limited to, server, desktop, laptop, notebook, netbook, tablet, smartphone, mobile phone, or any other computing device, in accordance with some embodiments of the present disclosure. The target concept analyzer 102 may recursively generate knowledge graphs based on a given target concept. Further, the target concept analyzer 102 may generate a response to a user query based on the generated knowledge graphs.

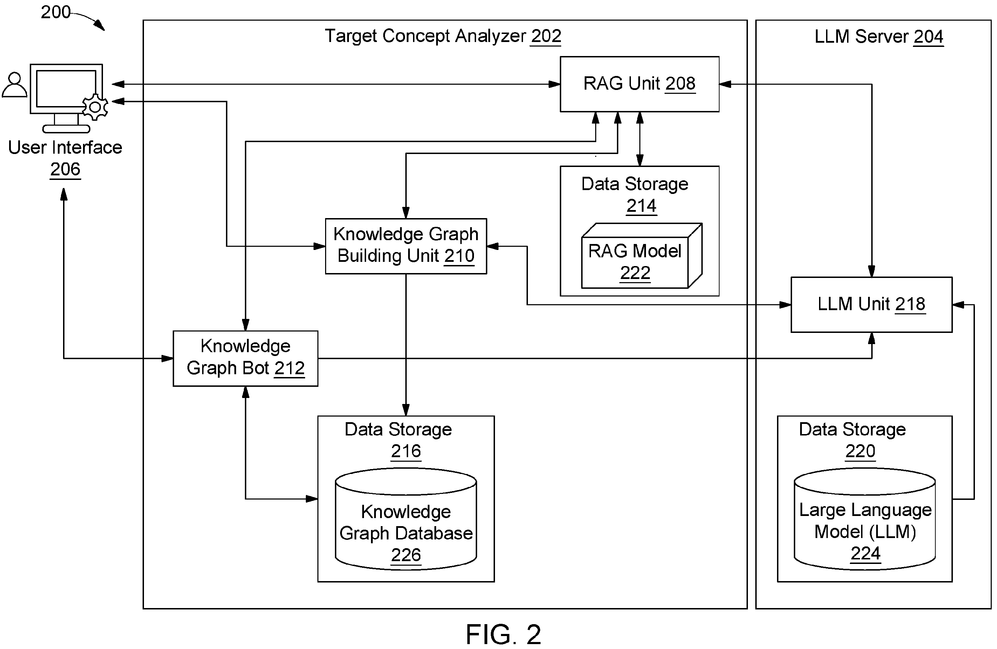

As will be described in greater detail in conjunction with FIGS. 2 - 10, in order to generate target concept-based knowledge graphs, the target concept analyzer 102 may receive input data from a user device. It should be noted that the input data may include a target concept, and a set of target concept parameters. The target concept analyzer 102 may further generate a factor-category list. The factor-category list may include a plurality of factors, each associated with one of a set of categories, based on the input data using a Large Language Model (LLM). The target concept analyzer 102 may further create a plurality of target concept embeddings from the input data and the factor-category list using an embedding model. The target concept analyzer 102 may further identify a relevant set of a plurality of domain embeddings from a Retrieval Augmented Generation (RAG) model based on a similarity analysis of the plurality of target concept embeddings with the plurality of domain embeddings. The target concept analyzer 102 may further provide a knowledge graph generation prompt to the LLM. It should be noted that the knowledge graph generation prompt may include the input data, the factor-category list, the relevant set of the plurality of domain embeddings, a set of predefined knowledge graph parameters, and a set of LLM instructions. The target concept analyzer may further recursively generate a knowledge graph based on the knowledge graph generation prompt, using the LLM. It should be noted that the knowledge graph may include a plurality of nodes and a plurality of edges. Each of the plurality of nodes corresponds to one of an event or a sub-event and is associated with one of the set of categories. Each of the plurality of edges corresponds to a relationship type between two of the plurality of nodes.

In some embodiments, the target concept analyzer 102 may include one or more processors 104 and a memory 106. Further, the memory 106 may store instructions that, when executed by the one or more processors 104, may cause the one or more processors 104 to generate target concept-based knowledge graphs, in accordance with aspects of the present disclosure. The memory 106 may also store various data (for example, a RAG model, knowledge graphs, instructions for an LLM, a plurality of domain embeddings, a plurality of target concept embeddings, and the like) that may be captured, processed, and/or required by the system 100. The memory 106 may be a non-volatile memory (e.g., flash memory, Read Only Memory (ROM), Programmable ROM (PROM), Erasable PROM (EPROM), Electrically EPROM (EEPROM) memory, etc.) or a volatile memory (e.g., Dynamic Random Access Memory (DRAM), Static Random-Access memory (SRAM), etc.).

The system 100 may further include a display 108. The system 100 may interact with a user interface 110 accessible via the display 108. The system 100 may also include one or more external devices 112. In some embodiments, the target concept analyzer 102 may interact with the one or more external devices 112 over a communication network 114 for sending or receiving various data. The communication network 114 may include, for example, but may not be limited to, a wireless fidelity (Wi-Fi) network, a light fidelity (Li-Fi) network, a local area network (LAN), a wide area network (WAN), a metropolitan area network (MAN), a satellite network, the internet, a fiber optic network, a coaxial cable network, an infrared (IR) network, a radio frequency (RF) network, and a combination thereof. The one or more external devices 112 may include, but may not be limited to, a remote server, a laptop, a netbook, a notebook, a smartphone, a mobile phone, a tablet, or any other computing device.

Referring now to FIG. 2, a functional block diagram of a system 200 for generating target concept-based knowledge graphs is illustrated, in accordance with some embodiments of the present disclosure. FIG. 2 is explained in conjunction with FIG. 1. The system 200 may be analogous to the system 100. The system 200 may include a target concept analyzer 202, an LLM server 204, and a user interface 206. The target concept analyzer 202 may include, within a memory (such as the memory 106), a Retrieval Augmented Generation (RAG) unit 208, a knowledge graph building unit 210, a knowledge graph bot 212, a data storage 214, and a data storage 216. The LLM server 204 may include, within a memory, an LLM unit 218, and a data storage 220. In an embodiment, the LLM server 204 may be an external server. Alternatively, the LLM unit 218 and the data storage 220 may be included in the memory of the target concept analyzer 202. In such an embodiment, the LLM server 204 may be excluded from the system 200.

The RAG unit 208 may receive domain-specific data from a user device through the user interface 206. The domain-specific data may include one or more files relevant to a subject (i.e., a domain of interest). The domain-specific data may be in a format of, for example, Portable Document Format (PDF), word document (DOC or DOCX), Text file (TXT), database records, long-form text, and the like. The domain-specific data may be associated with a domain of interest, such as medical domain, healthcare domain, entertainment domain, legal domain, e-commerce domain, finance domain, education domain, sports domain, or the like. The user device may be, for example, but may not be limited to, a laptop, a mobile phone, a notebook, a netbook, a smartphone, or any other computing device.

By way of an example, the user may provide the subject (e.g., `Nifty 50') through the user interface 206. Additionally, the user may provide the one or more files relevant to the subject (e.g. reports and articles related to Nifty 50) to the user interface 206. Further, the user interface 206 may send the domain-specific data to the RAG unit 208.

The RAG unit 208 may create a plurality of domain embeddings corresponding to the domain-specific data. In an embodiment, the RAG unit 208 may split the domain-specific data into a plurality of domain-specific data chunks (or tokens) using a splitting technique (e.g., fixed length chunking, sentence splitting, context defined chunking, etc.). Further, the RAG unit 208 may create the plurality of domain embeddings corresponding to the domain-specific data based on the plurality of domain-specific data chunks using an embedding model (such as Word2Vec, Continuous Bag of Words (CBOW), Skip-Gram model, GloVe, Fasttext, Bidirectional Encoder Representations from Transformers (BERT), ROBERTa, etc.). Further, the RAG unit 208 may store the plurality of domain embeddings in the data storage 214 to obtain a RAG model 222.

Further, the knowledge graph building unit 210 may receive, via the user interface 206, input data from the user device. The input data may include a target concept and a set of target concept parameters. The set of target concept parameters may include description of the target concept, domain of the target concept (such as, commercial domain, education domain, marketing domain, and the like), density of a knowledge graph, and maximum level of the knowledge graph. The density of the knowledge graph may be based on a breadth (i.e., number of events/sub-events to be generated at each level) and a decay value (0 < decay ≤ 1). In an embodiment, the density of the knowledge graph may be a product of the breadth and the decay value (i.e., density = breadth * decay). Thus, at each recursion, the number of events/sub-events generated may reduce based on the decay value. The breadth of the knowledge graph may be controlled by setting the number of events/sub-events returned in the prompts. The maximum level (or depth) of the knowledge graph may correspond to a depth of recursion (i.e., how deep or till how many levels the knowledge graph expands in the recursive algorithm). The density and the maximum level may be limiting values with respect to number of recursions. In other words, termination criteria for the recursive algorithm may be based on at least one of the density and the maximum level. For example, the termination criteria may be defined such that the recursion may continue until either the maximum level is reached or until number of events/sub-events generated stays above 0 (i.e., until breadth*decay > 0). The target concept may be any topic within the subject (i.e., domain-specific data) provided by the user previously.

In some embodiments, the user may be unable to provide the input data directly to the knowledge graph building unit 210 due to reasons such as lack of information in hand related to the target concept, lack of clarity about what the target concept should be, or simply confusion about user requirements. In such case, the RAG unit 208 may receive a target concept query from the user device. In other words, the user, being unsure of the target concept can simply provide a sample query or a list of sample queries to the user interface 206. The target concept query is then sent to the RAG unit 208. The RAG unit 208 may create a plurality of target concept embeddings from the target concept query through the embedding model.

Further, the RAG unit 208 may identify a relevant set of the plurality of domain embeddings corresponding to the plurality of target concept embeddings based on a similarity analysis. The similarity analysis may be, for example, but may not be limited to, cosine similarity, Euclidean distance, Jaccard similarity, Minkowski distance, and Manhattan distance. In other words, the RAG unit 208 may identify embeddings from the plurality of domain embeddings from the RAG model 222 that are closer to the plurality of the target concept embeddings based on the similarity analysis. Further, the RAG unit 208 may provide a target concept determination prompt to the LLM unit 218 within the LLM server 204. The target concept determination prompt may include the target concept query and the relevant set of the plurality of domain embeddings.

The LLM unit 218 may input the target concept determination prompt to an LLM 224 stored in the data storage 220. Further, the LLM unit 218 may determine a target concept using the LLM 224 based on the target concept determination prompt. In an embodiment, the LLM unit 218 may generate a set of responses based on the target concept determination prompt using the LLM 224. Further, the LLM unit 218 may provide the set of responses to the RAG unit 208. The RAG unit 208 may then present the set of responses on the user device via the user interface 206. The user may then select a relevant target concept from the set of responses. Thus, the user may also be provided assistance in determining a target concept.

Upon receiving the input data, the knowledge graph building unit 210 may create a factor-category list generating prompt. The factor-category list generating prompt may include the input data (i.e., the target concept and the set of target concept parameters), and instructions for the LLM 224 to identify a factor-category list. Further, the knowledge graph building unit 210 may input the factor-category list generating prompt to the LLM unit 218 inside the LLM server 204. Further, the LLM unit 218 may generate the factor-category list using the LLM 224. The factor-category list may include a plurality of factors, each associated with one of set of categories. In other words, the factor-category list may include factors that impact the target concept. Each of these factors may be mapped with one or more categories in which a corresponding factor may fall. The categories may be broad themes within the subject. The categories in the factor-category list may be presented as acronyms or strings of expanded form of the acronyms.

Further, the LLM unit 218 may send the factor-category list to the knowledge graph building unit 210. The knowledge graph building unit 210 may render, via the user interface 206, the factor-category list on the user device 206 to get a feedback from the user. In some embodiments, the knowledge graph building unit 210 may receive, via the user interface 206, a user feedback indicative of a modification to the factor-category list. The modification may correspond to addition, deletion, or updating of one or more factors and/or one or more categories. The user may add or remove one or more factors and its associated categories to the factor-category list as per user requirement. Further, the user may send an updated factor-category list to the knowledge graph building unit 210 through the user device 206. Alternatively, the user feedback may be indicative of an approval of the generated factor-category list. The knowledge graph building unit 210 may or may not modify the factor-category list depending upon the user feedback.

Further, the knowledge graph building unit 210 may send a retrieval prompt to the RAG unit 208. The retrieval prompt may include the factor-category list, input data, and instructions for the LLM unit 218. Upon receiving the retrieval prompt, the RAG unit 208 may identify a relevant set of the plurality of domain embeddings from the RAG model 222 based on the similarity analysis (e.g. cosine similarity) between the plurality of target concept embeddings and the plurality of domain embeddings. The RAG unit 208 may add the relevant set of the plurality of domain embeddings to the retrieval prompt to obtain a knowledge graph generation prompt. Further, the RAG unit 208 may send the knowledge graph generation prompt to the LLM unit 218

Further, the LLM unit 218, may recursively generate a knowledge graph based on the knowledge graph generation prompt, using the LLM 224 and RAG model 222. To elaborate, the LLM unit 218 may recursively generate a plurality of events or sub-events and event data of each of the plurality of events or sub-events, using the LLM 224 in response to the knowledge graph generation prompt. It should be noted that the number of recursions performed may be equal to the maximum level of knowledge graph defined by the user.

For each of the plurality of events or sub-events, the event data may include a probability score indicative of a relevance of an event or sub-events to the target concept. Additionally, the event data may include an event name, description of the event, and the acronym of the category of the event. Further, LLM unit 218 may send the plurality of events or sub-events and the event data to the RAG unit 208. Further, the RAG unit 208 may send the plurality of events or sub-events to the knowledge graph building unit 210.

Further, the knowledge graph building unit 210 may compare the probability score of each of the plurality of events or sub-events with a predefined threshold probability score. Further, upon comparison, the knowledge graph building unit 210 may select a set of events or sub-events from the plurality of events or sub-events based on the comparison. In an embodiment, the knowledge graph building unit 210 may store (or keep) only those events or sub-events from the plurality of events or sub-events for which the probability score of the event or sub-event is greater than the predefined threshold probability score. By way of an example, consider the predefined threshold probability score of the event may be '0.7' and the probability score of the event may be '0.72', then the knowledge graph building unit 210 may keep this event. On the other hand, if the probability score of the event may be '0.6', then the knowledge graph building unit 210 may reject the event.

Further, for each of the plurality of events or sub-events, the knowledge graph building unit 210 may determine a hierarchical level and a list of associated events. Further, the knowledge graph building unit 210 may recursively generate the knowledge graph based on the event data, hierarchical level, and the list of associated events. The knowledge graph may include a plurality of nodes and a plurality of edges. Each of the plurality of nodes represents one of an event or a sub-event and is associated with one of the set of categories. Each of the plurality of edges corresponds to a relationship type between two of the plurality of nodes.

Further, for each of the plurality of nodes, the knowledge graph building unit 210 may store the event data, the hierarchical level, and the list of associated events in a global data structure (for example, a hash map (such as in a variable Gnodes)) The hash map may include the plurality of nodes and their relationships with other nodes. For a new node, the knowledge graph building unit 210 may compare at least one element of the event data (e.g., the key) of the new node with the corresponding at least one element of the event data of each of the plurality of nodes. In other words, the key of the new node may be compared with the key of each of the plurality of nodes. The knowledge graph building unit 210 may add the new node to the knowledge graph based on an unsuccessful comparison (i.e., when a matching key is not found). On the other hand, the knowledge graph building unit 210 may append the list of associated events (i.e., head) of the new node with the list of associated events of a matching node (i.e., a node with a matching key with the key of the new node) from the plurality of nodes based on a successful comparison.

Further, the knowledge graph building unit 210 may convert the information stored inside the global data structure in any suitable query language (e.g. Cypher queries). The information is then stored in a knowledge graph database 226 in the data storage 216. The probability score associated with the node may be stored as an influence strength. By way of an example, influence strength is 'strong', when the probability score is greater than 0.75, and the influence score is 'medium', when the probability score is between 0.5 - 0.75.

Further, the knowledge graph building unit 210 may store the knowledge graph in the knowledge graph database 226. Upon storing the knowledge graph in the knowledge graph database 226, the knowledge graph building unit 210 may notify the user about the storage and successful creation of the knowledge graph.

Once the knowledge graph is successfully created, the knowledge graph bot 212 may be ready for deployment. The knowledge graph bot 212 may receive a user query from the user device through the user interface 206. The user query may be any query related to the target concept provided by the user previously. In an embodiment, the user that provides that target concept and creates the knowledge graph through LLM may be same as the user that provides the user query. Alternatively, the two users may be different individuals. For example, the user creating the knowledge graph may be a developer or an administrator, while the user providing the user query may be an end user or a consumer. Further, the knowledge graph bot 212 may send a request to the knowledge graph database 226 inside the data storage 216 for node metadata corresponding to each of the plurality of nodes of the knowledge graph. The node metadata for a node may include, for example, the name of the node and the description of the node.

Further, the knowledge graph database 226 may provide the node metadata corresponding to each of the plurality of nodes of the knowledge graph to the knowledge graph bot 212. Further, the knowledge graph bot 212 may store (or cache) node metadata of each of the plurality of nodes for the future reference. It should be noted that storing the node metadata of the plurality of nodes may increase the efficiency of the knowledge graph bot 212 and may also be not required to send the request to the knowledge graph database 226 for each user query.

Further, the knowledge graph bot 212 may create a node identification prompt. The node identification prompt may include the user query and the node metadata corresponding to each of the plurality of nodes of the knowledge graph. Additionally, the node identification prompt may include instructions for the LLM unit 218 to identify a first set of relevant nodes from the plurality of nodes corresponding to the user query. Further, the knowledge graph bot 212 may provide the node identification prompt to the LLM unit 218. Further, the LLM unit 218 may identify the first set of relevant nodes (or only the 'keys' of the nodes) corresponding to the user query from the plurality of nodes based on the node identification prompt using the LLM 224. Further, the LLM unit 218 may send the first set of relevant nodes to the knowledge graph bot 212.

Further, the knowledge graph bot 212 may render, via the user interface 206, the knowledge graph on the user device. The first set of relevant nodes and a path of each of the first relevant nodes to a target concept node are highlighted using the cypher queries in the rendered knowledge graph. The path may be calculated using a shortest path algorithm (such as a `Dijkstra path', Bellman-Ford algorithm, and Floyd-Warshall algorithm) from each of the first set of relevant nodes to the target concept node. Further, the knowledge graph bot 212 may retrieve the node metadata for a second set of relevant nodes (or active nodes) from the knowledge graph database 226. The second set of relevant nodes may include the first set of relevant nodes, the intermediary nodes (i.e., nodes on the shortest path between each of the first set of relevant nodes and the target concept node), and the neighboring nodes pointing to each of the first set of relevant nodes and each of the intermediary nodes.

Further, the knowledge graph bot 212 may generate a second retrieval prompt to receive the details of the second set of relevant nodes from the RAG unit 208. Further, the knowledge graph bot 212 may send the second retrieval prompt to the RAG unit 208. The second retrieval prompt may include the node metadata of the second set of relevant nodes. The RAG unit 208 may create a plurality of metadata embeddings based on the node metadata. Further, the RAG unit 208 may determine a relevant set of the plurality of domain embeddings from the RAG model 222 based on the plurality of metadata embeddings through the similarity analysis. Further, the RAG unit 208 may add the relevant set of plurality of domain embeddings to the second retrieval prompt to obtain a summary generation prompt. Thus, the summary generation prompt may include the relevant set of plurality of domain embeddings and the node metadata of each of the second set of relevant nodes.

Further, the RAG unit 208 may provide the summary generation prompt to the LLM unit 218. Further, the LLM unit 218 may generate a response to the user query based on the summary generation prompt using the LLM 224. The response may include a list of summaries corresponding to the second set of relevant nodes. Further, the LLM unit 218 may send the list of summaries to the RAG unit 208. Further, the RAG unit 208 may send the list of summaries to the knowledge graph bot 212. Further, the knowledge graph bot 212 may render the list of summaries on the user device through the user interface 206. The neighbouring nodes provides extra intelligence about what factors driving the main detected events through user queries.

It should be noted that all such aforementioned modules 202 - 226 may be represented as a single module or a combination of different modules. Further, as will be appreciated by those skilled in the art, each of the modules 202 - 226 may reside, in whole or in parts, on one device or multiple devices in communication with each other. In some embodiments, each of the modules 202 - 226 may be implemented as dedicated hardware circuit comprising custom application-specific integrated circuit (ASIC) or gate arrays, off-the-shelf semiconductors such as logic chips, transistors, or other discrete components. Each of the modules 202 - 226 may also be implemented in a programmable hardware device such as a field programmable gate array (FPGA), programmable array logic, programmable logic device, and so forth. Alternatively, each of the modules 202 - 226 may be implemented in software for execution by various types of processors (e.g., processor 104). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for generating target concept-based knowledge graphs. For example, the exemplary system 100 and the associated target concept analyzer 102, 204 may generate target concept-based knowledge graphs, by the processes discussed herein. In particular, as will be appreciated by those of ordinary skill in the art, control logic and/or automated routines for performing the techniques and steps described herein may be implemented by the system 100 and the associated target concept analyzer 102, 204 either by hardware, software, or combinations of hardware and software. For example, suitable code may be accessed and executed by the one or more processors on the system 100 to perform some or all of the techniques described herein. Similarly, application specific integrated circuits (ASICs) configured to perform some or all of the processes described herein may be included in the one or more processors on the system 100.

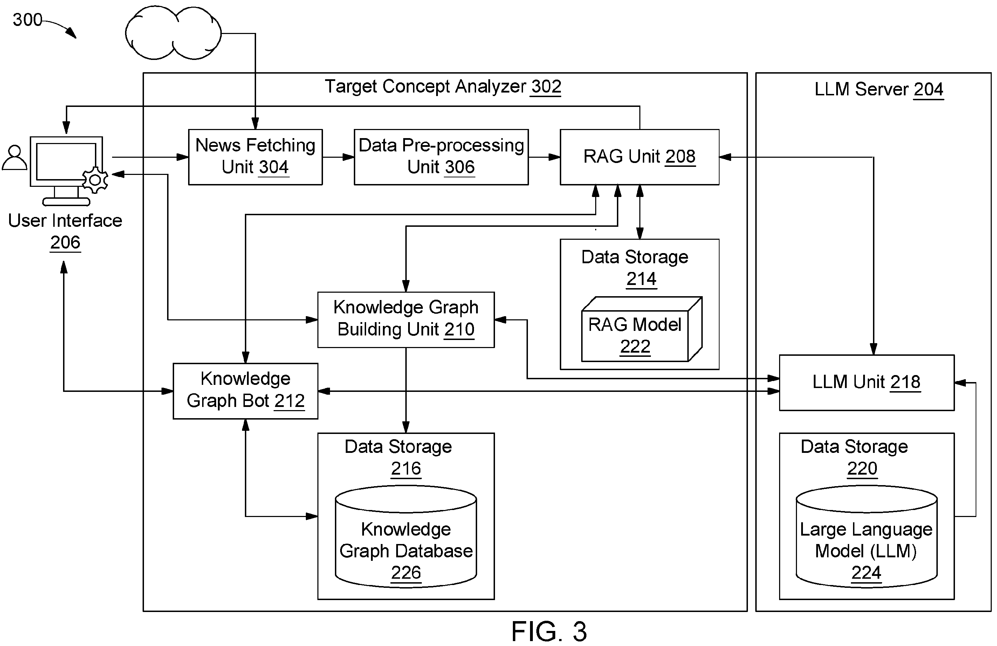

Referring now to FIG. 3, another functional block diagram of a system 300 for generating target concept-based knowledge graphs is illustrated, in accordance with some embodiments of the present disclosure. FIG. 3 is explained in conjunction with FIGS. 1 and 2. The system 300 may be analogous to the system 100. The system 300 may include a target concept analyzer 302 (similar to the target concept analyzer 202) and the LLM server 204. A memory (such as the memory 106) of the target concept analyzer 302 may include a news fetching unit 304, a data pre-processing unit 306, and in addition to the modules 208-216, 222, and 226 (functioning of which is already explained in conjunction with FIG. 2).

Initially, the news fetching unit 304 may receive subject, time interval and a list of sources from user device through the user interface 206. The user interface 206 may receive the subject, time interval (e.g. last 30 days), and the list of data sources (e.g., Google^{®} news, Google^{®} Scholar, Springer, IEEE, Youtube^{®}, news sites, blogs, and the like) from a user. In some embodiments, the user may directly provide the list of data sources to the user interface 206. In an embodiment, the user may select the data sources from a dropdown list of sources provided on the user interface 206. The dropdown list may include the list of data sources. Alternatively, the user may provide all the relevant links associated with the subject through the user interface 206.

Further, the news fetching unit 304 may send a request to the various data sources contained in the list of data sources to scrape data for the subject for the given time interval from these data sources. The data sources may respond with web pages to the news fetching unit 304. Once the scraped data is received, the news fetching unit 304 may send the scraped data along with the subject to the data pre-processed unit 306. Further, the data pre-processing unit 306 may pre-process the scraped data by removing the non-ascii and control characters (if any) by using regular expression.

Further, the data pre-processing unit 306 may create a pre-processed consolidated file corresponding to the scraped data. Further, the data pre-processing unit 306 may send the pre-processed consolidated file to the RAG unit 208. Upon receiving the pre-processed consolidated file, the RAG unit 208 may a plurality of chunks from the consolidated file. Further, the RAG unit 208 may then create the plurality of domain embeddings corresponding to the plurality of chunks. Further, the RAG unit 208 may store the plurality of domain embeddings in the data storage 214 to obtain the RAG model 222. Further, the RAG model 222 may be used for generation of the knowledge graph as already explained in conjunction with FIG. 2.

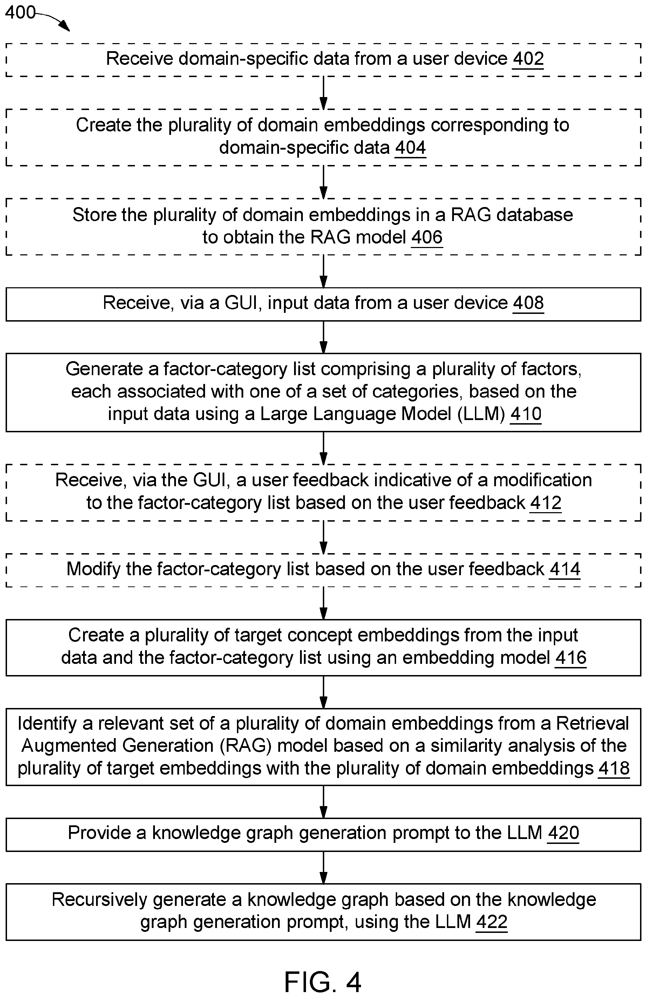

Referring now to FIG. 4, an exemplary process 400 for generating target concept-based knowledge graphs is illustrated via a flow chart, in accordance with some embodiments of the present disclosure. The process 400 may be implemented by the target concept analyzer 102 of the system 100. In some embodiments, the process 400 may include receiving, by a RAG unit (such as the RAG unit 208), domain-specific data from a user device, at step 402. The domain-specific data may be received in the form of PDF from a user interface (such as the user interface 206). Once the domain-specific data is received, the process 400 may include creating, by the RAG unit, a plurality of domain embeddings corresponding to the domain-specific data, at step 404. Further, the process 400 may include storing, by the RAG unit, the plurality of domain embeddings in a RAG database (such as the data storage 214) to obtain a RAG model (such as the RAG model 222), at step 406.

Further, the process 400 may include receiving, via the GUI (such as the user interface 206), input data from the user device, at step 408. The input data may include a target concept, and a set of target concept parameters. The set of target concept parameters may include description of the target concept, domain of the target concept, density of a knowledge graph, and maximum level of the knowledge graph. In some embodiments, the user may directly provide the target concept and the set of target concept parameters to the user interface.

In some embodiments, the user may not provide the target concept and the set of target concept parameters to the user interface. In such cases, the process 400 may include receiving, by the RAG unit, a target concept query (or one or more sample queries) from the user device through the user interface. Further, the process 400 may include creating, by the RAG unit, a plurality of target concept embeddings from the target concept query. Further, the process 400 may include identifying, by the RAG unit, a relevant set of the plurality of domain embeddings corresponding to the plurality of target concept embeddings based on a similarity analysis (e.g., cosine similarity). Further, the process 400 may include providing, by the RAG unit, a target concept determination prompt to an LLM (such as the LLM 224). The target concept determination prompt may include the target concept query and the relevant set of the plurality of domain embeddings. Further, the process 400 may include determining, by the LLM unit, a target concept using the LLM based on the target concept determination prompt.

Upon receiving the input data, the process 400 may include generating, by the LLM unit, a factor-category list, at step 410. The factor category list may include a plurality of factors, each associated with one of a set of categories, based on the input data using the LLM. In some embodiments, the process 400 may include receiving, by the knowledge graph building unit via the GUI, a user feedback indicative of a modification to the factor-category list based on the user feedback, at step 412. Further, the process 400 may include modifying, by the knowledge graph building unit, the factor-category list based on the user feedback, at step 414. The modification may correspond to addition, deletion, or updating of one or more factors or categories in the factor-category list.

Further, the process 400 may include creating, by the RAG unit, a plurality of target concept embeddings from the input data and the factor-category list using an embedding model, at step 416. Further, the process 400 may include identifying, by the RAG unit, a relevant set of the plurality of domain embeddings from the RAG model based on the similarity analysis of the plurality of target embeddings with the plurality of domain embeddings, at step 418. Further, the process 400 may include providing, by the knowledge graph building unit, a knowledge graph generation prompt to the LLM, at step 420. The knowledge graph generation prompt may include the input data, the factor-category list, the relevant set of the plurality of domain embeddings, a set of predefined knowledge graph parameters, and a set of LLM instructions.

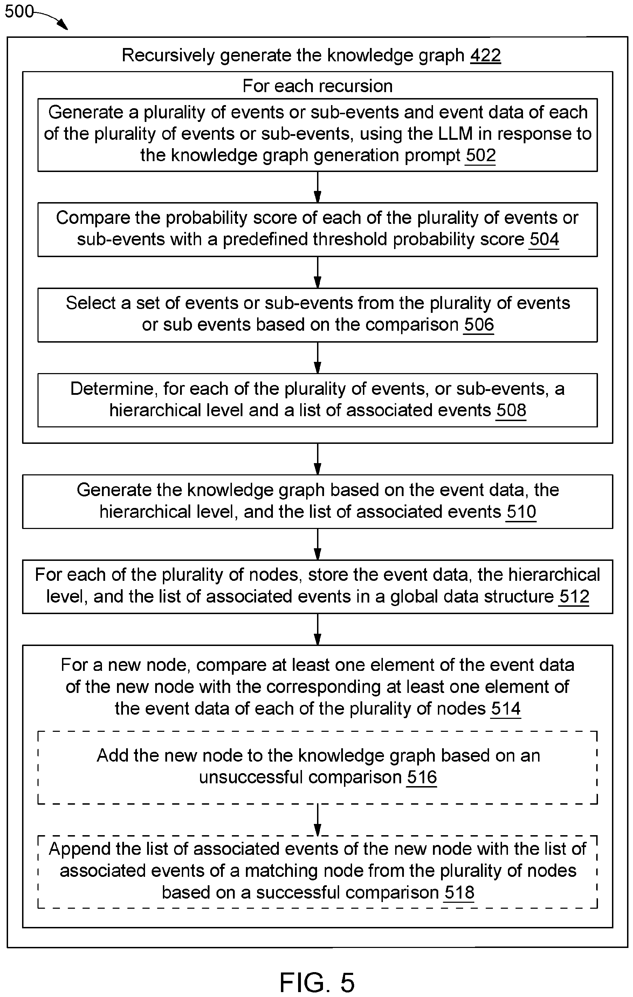

Further, the process 400 may include recursively generating, by the knowledge graph building unit, a knowledge graph based on the knowledge graph prompt, using the LLM, at step 422. The knowledge graph may include a plurality of nodes and a plurality of edges. Each of the plurality of nodes corresponds to one of an event or a sub-event and is associated with one of set of the set of categories. Each of the plurality of edges corresponds to a relationship type between two of the plurality of nodes. This is explained in greater detail in conjunction with FIG. 5.

Referring now to FIG. 5, an exemplary process 500 for recursively generating a knowledge graph is illustrated via a flow chart, in accordance with some embodiments of the present disclosure. FIG. 5 is explained in conjunction with FIG. 4. The process 500 may include recursively generating, by the knowledge graph building unit, a knowledge graph based on the knowledge graph prompt, using the LLM, at step 422. The step 422 may include a plurality of recursions. The number of the plurality of recursions may be equal to the maximum level of the knowledge graph provided by the user. For ease of explanation, steps performed for a single recursion of the step 422 are explained in conjunction with FIG. 5.

For each recursion, the step 422 of the process 500 may include generating, by a LLM unit (such as the LLM unit 218), a plurality of events or sub-events and event data of each of the plurality of events or sub-events, using a LLM (such as the LLM 224) in response to the knowledge graph generation prompt, at step 502. For each of the plurality of events or sub-events, the event data may include a probability score indicative of a relevance of an event or sub-event to the target concept. Additionally, the event data may include a name of the events or sub-events, description of the events or sub-events, and an acronym of a factor-category list associated with the events or sub-events. In the first recursion, the LLM unit 218 may generate the plurality of events. In the second recursion, the LLM unit 218 may generate a plurality of sub-events associated with each of the plurality of events. For subsequent recursions, the plurality of sub-events generated in the previous recursion may be treated as a new plurality of events, and the LLM unit 218 may generate a new plurality of sub-events associated with the new plurality of events.

Further, for each recursion, the process 500 may include comparing, by a knowledge graph building unit (such as the knowledge graph building unit 210), a probability score of each of the plurality of events or sub-events with a predefined threshold probability score, at step 504. For each recursion, the process 500 may include selecting, by the knowledge graph building unit, a set of events or subevent from the plurality of events or sub-events based on the comparison, at step 506. By way of an example, the knowledge graph building unit 210 may keep only those plurality of events or sub-events whose probability score is more than the predefined probability score.

Further, for each of the plurality of events or sub-events, the process 500 may include determining, by the knowledge graph building unit, a hierarchical level and a list of associated events, at step 508. Further, the process 500 may include generating, by the knowledge graph building unit, the knowledge graph based on the event data, the hierarchical level, and the list of associated events, at step 510. Each of the plurality of events or sub-events is represented as a node in the knowledge graph.

Once the knowledge graph is generated, for each of the plurality of nodes, the process 500 may include storing, by the knowledge graph building unit, the event data, the hierarchal level, and the associated events in a global data structure (such as a hash map), at step 512.

Further, for a new node, the process 500 may include comparing, by the knowledge graph building unit, at least one element of the event data of the new node with the corresponding at least one element of the event data of each of the plurality of nodes, at step 514. The step 514 of the process 500 may include adding, by the knowledge graph building unit, the new node to the knowledge graph based on an unsuccessful comparison, at step 516. Further, the step 514 of the process 500 may also include appending, by the knowledge graph building unit, the list of associated events of the new node with the list of associated events of a matching node from the plurality of nodes based on a successful comparison, at step 518.

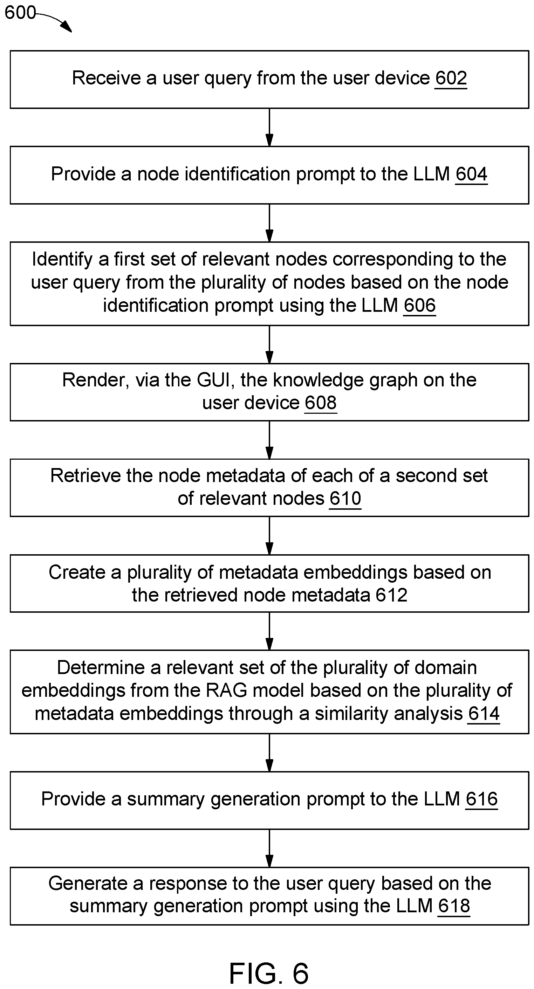

Referring now to FIG. 6, an exemplary process 600 for generating a response to a user query through a knowledge graph bot is illustrated via a flow chart, in accordance with some embodiments of the present disclosure. FIG. 6 is explained in conjunction with FIGS. 4 and 5. The process 600 may be implemented upon successful generation of the knowledge graph through the process 400 and the process 500. In some embodiments, the process 600 may include receiving, by a knowledge graph bot (such as the knowledge graph bot 212), a user query from a user device, at step 602. Further, the process 600 may include providing, by the knowledge graph bot, a node identification prompt to a LLM (such as the LLM 224), at step 604. The node identification prompt may include the user query and node metadata corresponding to each of a plurality of nodes of the knowledge graph.

Further, the process 600 may include identifying, by a LLM unit (such as the LLM unit 218), a first set of relevant nodes corresponding to the user query from the plurality of nodes based on the node identification prompt using the LLM, at step 606. Further, the process 600 may include rendering via a GUI, by the knowledge graph bot, a knowledge graph on the user device, at step 608. The first set of relevant nodes and a path of each of the first set of relevant nodes to a target concept node are highlighted in the rendered knowledge graph. The path may include intermediary nodes and one or more associated edges between each of the first set of relevant nodes and the target concept node.

Further, the process 600 may include retrieving, by the knowledge graph bot, the node metadata of each a second set of relevant nodes, at step 610. The second set of relevant nodes may include the first set of relevant nodes, the intermediary nodes, and neighboring nodes associated with each of the first set of relevant nodes and each of the intermediary nodes. Upon retrieving all the nodes, the process 600 may include creating, by a RAG unit (such as the RAG unit 208), a plurality of metadata embeddings based on the retrieved node metadata, at step 612. Further, the process 600 may include determining, by the RAG unit, a relevant set of the plurality of domain embeddings from a RAG model (such as the RAG model 222) based on the plurality of metadata embeddings through a similarity analysis, at step 614.

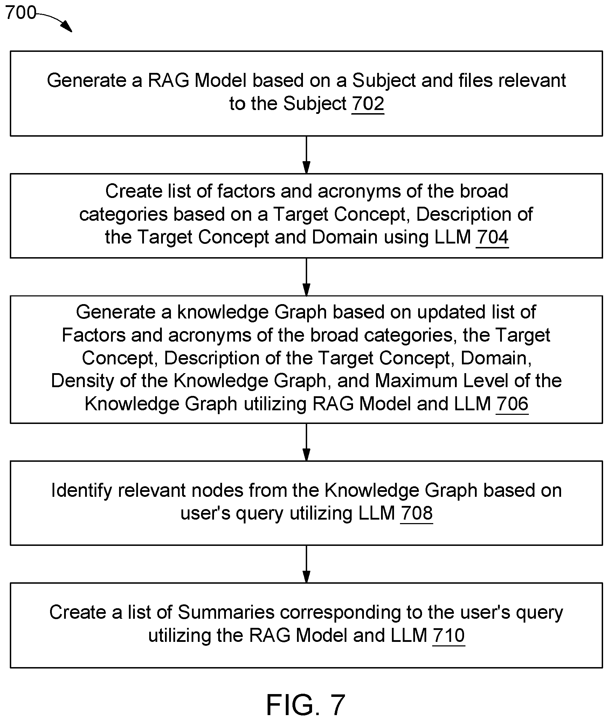

Further, the process 600 may include providing, by the RAG unit, a summary generation prompt to the LLM, at step 616. The summary generation prompt may include the relevant set of the plurality of domain embeddings and the node metadata of each of the second set of relevant data. Further, the process 600 may include generating, by the knowledge graph bot, a response to the user query based on the summary generation prompt using the LLM, at step 618. The response may include a list of summaries corresponding to the second set of relevant nodes. This is explained in greater detail in conjunction with FIG. 7.

Referring now to FIG. 7, a detailed exemplary process 700 for generating target concept-based knowledge graph is illustrated via a flow chart, in accordance with some embodiments of the present disclosure. The process 700 may be implemented by the target concept analyzer 102 of the system 100. FIG. 7 is explained in conjunction with FIGS. 2 - 6. In an embodiment, the process 700 may include generating, by the RAG unit 208, the RAG model 222 based on a subject and one or more files relevant to the subject, at step 702. Initially, the RAG unit 208 may receive the one or more files relevant to the subject from the user interface 206. The one or more files may include data (or information) relevant to the subject. The user interface 206 may receive the subject and the one or more files relevant to the subject from a user previously. The RAG unit 208 may receive the one or more files in the form of PDF from the user interface 206.

Upon receiving the one or more files, the RAG unit 208 may create a plurality of chunks from the one or more files (i.e., PDFs) relevant to the subject. Further, the RAG unit 208 may create plurality of embeddings (such as the plurality of domain embeddings) corresponding to the plurality of chunks. The plurality of embeddings may be analogous to the plurality domain embeddings. Once the plurality of embeddings is created, the RAG unit 208 may store the plurality of embeddings in the RAG database inside the data storage 214 to obtain the RAG model 222.

By way of an example, the subject may be `Standard and Poor's 500' (S&P 500). The one or more files relevant to the 'S&P 500' may be a google news data for a particular time period (e.g. last 30 days), one or more reports (e.g. from International Monetary Fund (IMF) organization) about a global economic outlook and a regional economic outlook for the particular time period.

Once the RAG model 222 is generated, the process 700 may include creating, by the knowledge graph building unit 210, a factor-category list based on a target concept, and a set of target concept parameters using the LLM 224, at step 704. The factor-category list may include the plurality of factors and its associated acronyms of broad categories corresponding to the target concept. The set of target concept parameters may include description of the target concept, domain of the target concept, density of a knowledge graph, and maximum level of the knowledge graph.

In a preferred embodiment, the knowledge graph building unit 210 may receive the target concept and the set of target concept parameters from the user device through the user interface 206. By way of an example, the knowledge graph building unit 210 may directly receive the target concept, and the set of target concept parameters from the user through the user interface 206.

By way of an example, the target concept may be `S&P 500 high', the description of the target concept may be "S&P 500' to go high in coming weeks or months', the domain of the target concept may be 'Finance', the density (i.e., breadth * decay) of the knowledge graph may be '2', and the maximum level (or depth) of the knowledge graph may be '2'.

In some embodiments, the user may not provide the target concept and the set of target concept parameters directly to the knowledge graph building unit 210. In such cases, the RAG unit 208 may receive a target concept query within the subject from the user through the user interface 206. Upon receiving the target concept query, the RAG unit 208 may create a plurality of target concept embeddings from the target concept query. Further, the RAG unit 208 may identify a relevant set of plurality of domain embeddings from the RAG model 222 corresponding to the plurality of target concept embeddings based on a cosine similarity. Further, the RAG unit 208 may provide a target concept determination prompt to the LLM unit 218 inside the LLM server 204. The target concept determination prompt may include the target concept query and the relevant set of the plurality of domain embeddings. Upon receiving the target concept determination prompt, the LLM unit 218 may determine the target concept using the LLM 224 based on the target concept determination prompt. The LLM unit 218 may fetch the LLM 224 from the data storage 220. Further, the LLM unit 218 may prepare a response based on the target concept query and the relevant set of plurality of domain embeddings using the LLM 224. Once the response is prepared, the LLM unit 218 may provide the response to the RAG unit 208. Further, the RAG unit 208 may provide the response to the target concept query on the user interface 206. It should be noted that the response rendered on the user interface 206 may help the user to determine the target concept.

By way of an example, the user may ask a question through the user interface (such as the user interface 206) like `How S&P 500 will move in coming weeks'. Further, to determine the target concept, the RAG unit 208 may determine the response by creating the plurality of target concept embeddings corresponding to the target concept query using the cosine similarity by utilizing the LLM 224 through the LLM unit 218. Further, the RAG unit 208 may provide the response to the user interface. It should be noted that the rendered response may help the user to determine the target concept.

Once the target concept and the set of target concept parameters is received, the knowledge graph building unit 210 may create a prompt. The prompt may include the target concept, description of the target concept, domain of the target concept, and instructions for the LLM 224 to identify the factor-category list that may impact the target concept. Further, the knowledge graph building unit 210 may send the prompt to the LLM unit 218 inside the LLM server 204.

By way of an example, an exemplary prompt created by the knowledge graph building unit 210 is described as below.
"I want to understand a concept <S&P 500> with Description <S&P 500 to go high in coming weeks or months > within <Finance> domain.
Given this, emit the factors that might influence the target concept with acronym of the broad categories in 3 characters.
Follow the output format example below.
Output format: Factor 1 (F01), Factor 2 (F02), Factor 3 (F03), etc. Just emit factors and nothing else. Please provide the output as a list".

Once the prompt is received by the LLM unit 218, the LLM unit 218 may generate the factor-category list based on the target concept, description of the target concept and the domain of the target concept by using the LLM 224.

By way of an example, an exemplary factor-category list generated by the LLM unit 218 as shown below.

"Units which may influence `S&P 500' may include,
a. GDP (GDP)
b. Unemployment rate (ECO)
c. Interest rates (ECO)
d. Inflation (ECO)
e. Company earnings (CORP)
f. Geo-political events (GEO)
g. Currency exchange rates (ECO)
h. Technology changes (TECH)
i. Others (OTH)"

It should be noted that 'GDP' may stand for Gross Domestic Product, `ECO' for Economic Cooperation Organization, 'GEO' for Global Employment Organization, 'TECH' for Technology, and 'OTH' for other fields influencing the target concept.

Further, the LLM unit 218 may send the factor-category list to the knowledge graph building unit 210. Further, the knowledge graph building unit 210 may render the factor-category list to the user interface 206 to get validation from the user whether the user may agree with the factor-category list or not. The knowledge graph building unit 210 may receive a user feedback indicative of a modification to the factor-category list. In some embodiments, if the user may not agree with the factor-category list generated by the LLM unit 218, the user may add the one or more factors and its associated acronyms of broad categories to the factor-category list as per their need. Similarly, the user may remove one or more factors and its associated acronyms of broad categories to the factor-category list as per their need. In some other embodiments, if the user may agree with the factor-category list generated by the LLM unit 218, the user may send back the same factor-category list to the knowledge graph building unit through the user interface 206.

Further, the knowledge graph building unit 210 may receive the factor-category list incorporating user's feedback (if any) from the user via the user interface 206. By way of an example, if the user may add or remove one or more factors and its associated acronyms of broad categories to the factor-category list, then the knowledge graph building unit 210 may modify the factor-category list based on the user feedback accordingly.

Further, the process 700 may include generating, by the knowledge graph building unit 210, a knowledge graph based on the factor-category list, target concept, description of the target concept, domain of the target concept, density of the knowledge graph, and the maximum level of the knowledge graph, at step 706. The knowledge graph building unit 210 may receive back the factor-category list incorporating user feedback (if any) from the user via the user interface 206. Further, the knowledge graph building unit 210 may send a prompt to the RAG unit 208. The prompt may include the factor-category list, the target concept, description of the target concept, domain of the target concept, density of the knowledge graph, maximum level of the knowledge graph, and instructions for the LLM unit 218.

Upon receiving the prompt from the knowledge graph building unit 210, the RAG unit 208 may create a plurality of target concept embeddings from the target concept, description of the target concept, domain of the target concept, and the factor-category list using an embeddings model (e.g., Word2Vec, GloVe, BERT, etc.). Further, the RAG unit 208 may identify a relevant set of plurality of embeddings from the RAG model 222 based on a cosine similarity of the plurality of target concept embeddings with the plurality of embeddings.

Additionally, once the relevant set of plurality of embeddings is identified, the RAG unit 208 may add the relevant set of the plurality of embeddings, to the prompt. Further, the RAG unit 208 may send a modified knowledge graph generation prompt to the LLM unit 218. Upon receiving the modified knowledge graph generation prompt, the LLM unit 218 may generate a list of events or sub-events using the LLM 224. Further, the LLM unit 218 may send the list of events or sub-events to the RAG unit 208. Further, the RAG unit 208 may send the list of events or sub-events to the knowledge graph building unit 210. The knowledge graph building unit 210 may prepare the knowledge graph using the list of events and the sub-events.

The knowledge graph building unit 210 may use an algorithm to generate the knowledge graph. The algorithm may automatically construct the knowledge graph. The algorithm may define an ontology of the knowledge graph automatically, allows to extent the knowledge graph to the different domains without requiring any additional supervised training data. A plurality of nodes may be entities, events, or abstract concepts. A dynamic ontology may be constructed using the LLM. Hence, events and abstract concepts may be difficult to detect using a standard Named Entity Recognition (NER) mode. Further, the LLM may be used to identify the relevant entities, events, or abstract concepts in the knowledge graph.

The knowledge graph building unit 210 may run a recursive algorithm up to the maximum level of the knowledge graph (e.g., up to 2 levels). To elaborate, for a first recursion, the knowledge graph building unit 210 may send a prompt to the RAG unit 208. The prompt may include the target concept, description of the target concept, domain of the target concept, density of the knowledge graph, and the factor-category list. The prompt may also include a set of LLM instructions. The set of LLM instructions may include instructions for the LLM 224 to generate the list of events with event data. Based on the set of LLM instructions, the event data may include an event name (i.e., name of the event in less than 10 words), description of the event (i.e., meaningful description of the event in between 20 - 30 words), probability score of the event which affecting the target concept (i.e., probability score between 0 - 1), and acronyms of a category of the event. It should be noted that the probability score may indicate strength of evidence.

Further, once the prompt is received, the RAG unit 208 may create the plurality of embeddings corresponding to the target concept, description of the target concept, domain of the target concept, and the factor-category list. Once the plurality of embeddings is created, the RAG unit 208 may identify a relevant set of plurality of embeddings from the RAG model 222 which are closer to the plurality of embeddings corresponding to the target concept, description of the target concept, domain of the target concept, and the factor-category list using the cosine similarity.

Further, the RAG unit 208 may add the relevant set of plurality of embeddings from the RAG model 222 to the prompt and may create a modified prompt. Further, the RAG unit 208 may send the modified prompt to the LLM unit 218. Upon receiving the modified prompt, the LLM unit 218 may generate the list of events based on the density of the knowledge graph. For each event, the list of events may include the event name, description of the event, the probability score for the event and the acronyms of the category of the event.

By way of an example, an exemplary event (or node) format may be described as below.
"{name of event in less than 10 words | meaningful description in 20 to 30 words | a score between 0 to 1 indicating probability/strength of evidence | acronym of category}"

Upon generating the list of events, the LLM unit 218 may send the list of events to the RAG unit 208. Further, the RAG unit 208 may send the list of events to the knowledge graph building unit 210. The knowledge graph building unit 210 may accept (or select) only those events whose probability score is greater than then a predefined threshold probability score. It should be noted that the knowledge graph building unit 210 may append levels (i.e., hierarchical level of the node in the knowledge graph) and head (i.e., list of nodes that the node is pointing to). The knowledge graph building unit 210 may store all the events and their relationships in a global data structure (or Gnode).

By way of an example, the knowledge graph building unit 210 may store all the events and relationships in the Gnode in the below exemplary format.
"{'name of event in 10 words': {'desc': 'description of event in 20 to 30 words', 'prob': probability indicating strength of this event, 'cat': category, 'level': level, 'head': [list of nodes it is pointing to]} }"

By way of an example, after the first recursion, following two exemplary nodes for the target concept `S&P 500' may be obtained.
"{'Interest rate cuts expected': {'desc': 'Predictions of Federal Reserve lowering rates', 'prob': '0.8', 'cat': 'ECO', 'level': 1, 'head': ['S&P High']}},
{'Robust corporate profits': {'desc': 'Strong earnings driving market optimism', 'prob': '0.7', 'cat': 'CORP', 'level': 1, 'head': ['S&P High']}}"

For a second recursion, for each event obtained in the first recursion, the knowledge graph building unit 210 may send a prompt to the RAG unit 208. The prompt may include the event name, description of the event, domain of the event, density of the knowledge graph, the factor-category list, and the set of LLM instructions to generate a list of sub-events with sub-event data. The sub-event data may include a sub-event name (i.e., name of the event in less than 10 words), description of the sub-event (e.g., meaningful description of the sub-event in between 20 - 30 words), probability score of the sub-event affecting the target concept (e.g. the probability score between 0 - 1 indicating strength of evidence), and the acronyms of the category of the sub-event.

Upon receiving the prompt, the RAG unit 208 may create a plurality of embeddings corresponding to the event name, description of the event, domain of the event, and the acronyms of the broad category of the event. Further, upon creating the plurality of embeddings, the RAG unit 208 may identify a relevant set of plurality of embeddings from the RAG model 222 which are closer to the plurality of embeddings corresponding to the event name, description of the event, domain of the event, and the acronyms of the broad category of the event using the cosine similarity.

Further, the RAG unit may add the relevant set of plurality of embeddings (which identified from the RAG model 222) to the prompt. Further, the RAG unit 208 may send a modified prompt to the LLM unit 218. Upon receiving the modified prompt, the LLM unit 218 may generate the list of sub-events. Once the list of sub-events is generated, the LLM unit 218 may send the list of sub-events to the RAG unit 208. For each sub-event, the list of sub-events may include the sub-event name, description of the sub-event, probability score of the sub-event affecting the event, and the acronym of category of the sub-event.

A function may be developed to recursively generate the modified prompt. By way of an example, the function below interacts with the RAG model 222 and the training data to discover sub events based on the event provided in the function.

```
 "getSubEvents(event)
 prompt={
 "content": """
```

You are an expert in financial domain.
From the given context data, find events, such as in categories with their acronym in parenthesis:
GDP (GDP)
unemployment rate (ECO)
interest rates (ECO)
inflation (ECO)
company earnings (CORP)
geo-political events (GEO)
currency exchange rates (ECO)
technology changes (TECH)
others (OTH)
The key events should have happened or mentioned to happen that may influence {} .
You will find events in this format: {{ name of event in less than 10 words | meaningful description in 20 to 30 words | a score between 0 to 1 indicating strength of evidence | acronym of category}}.
All fields are mandatory.
Just emit important events always in curly braces, no more than 15, one each line without any index in simple text without new line or special characters.
The events should be unique telling orthogonal reasons for impact suitable for building Knowledge Graph.
Only emit events that may cause { }.

```
If there are no events emit {{na | na | na| na} }
 """.format(event['desc'], event['desc'])
 sub-events=callRag(prompt)
 sub-events=postprocess(sub-events)
 return sub-events"
```

In the prompt above "no more than 15" is the value obtained by multiplying breadth and decay (i.e., breadth * decay). For example, if breadth is set to 15 and decay to 0.5, in the first level of recursion, the prompt will start by generating 15 events (the prompt may include "no more than 15"). In the second level of recursion, 7 sub-events will be generated (the prompt may include "no more than 7"). In the third level of recursion, 3 sub-events will be generated, and so on.

Further, the RAG unit 208 may send the list of sub-events to the knowledge graph building unit 210. Upon receiving the list of sub-events, the knowledge graph building unit 210 may select only those events whose probability score is greater than the predefined threshold probability score. Further, the knowledge graph building unit 210 may append level (e.g., level of the node in the knowledge graph) and head (e.g., list of nodes it is pointing to). Further, the knowledge graph building unit 210 may store all the sub-events and their relationships in the global data structure (for example, a hash map (such as in a variable Gnodes)). It should be noted that for running the next recursion the sub-events may be treated as the event.

In continuation with the above example, after second recursion, an exemplary two nodes for the event "Interest rate cuts expected" is described as below.
"{'Goldman Sachs predicts rate cuts': {'desc': 'Investment bank forecasts Federal Reserve interest rate reductions', 'prob': '0.9', 'cat': 'ECO', 'level': 2, 'head': ['Interest rate cuts expected']}, 'Fed hints at rate cuts': {'desc': 'Federal Reserve signals potential lowering of interest rates', 'prob': '0.85', 'cat': 'ECO', 'level': 2, 'head': ['Interest rate cuts expected']}}"

In continuation with the above example, after the second recursion an exemplary two nodes for the event "Robust corporate profits" may be as follows.
"{'Earnings season momentum': {'desc': 'Companies beating lowered estimates', 'prob': '0.7', 'cat': 'CORP', 'level': 2, 'head': ['Robust corporate profits']},
'Positive corporate forecasts': {'desc': 'Procter & Gamble and United Airlines report strong profits', 'prob': '0.6', 'cat': 'CORP', 'level': 2, 'head': ['Robust corporate profits']}}"

Further, the knowledge graph building unit 210 may store the plurality of nodes and their relationships with other nodes in the global data structure. The global data structure may also be known as Gnodes. In Gnodes the plurality of nodes may be stored in the form of hash map. The hash map may store the plurality of nodes and their relationships with other nodes.

In an embodiment, during the knowledge graph generation process, duplicate nodes may be created that look very similar in terms of name and description. Such duplicate nodes may be post-processed and collapsed into one node. The node may be identified by the name after removing the white spaces, and keeping only a-z or 0-9 characters. When created, the name may be treated as a 'key' and stored. For each node, a check may be performed to determine whether the key already exists in the hash map. If a matching key corresponding to the key is found in the hash map, the knowledge graph building unit 210 may identify the nodes corresponding to the key and the matching key as duplicate nodes. In such a case, the knowledge graph building unit 210 may append the heads of duplicate nodes with a new head or parent node in the knowledge graph. On the other hand, if a matching key is not found, the knowledge graph building unit 210 may add a new node into the knowledge graph.

Further, the knowledge graph building unit 210 may convert the information stored in the Gnode as Cypher query (for neo4j) or any other suitable query language to store in the knowledge graph database 226. The probability score may also be stored in the knowledge graph database 226 as the influence strength. By way of an example, the influence strength may be 'strong' when the probability score is greater than the predefined threshold probability score (e.g., 0.75). The influence strength may be 'medium' when the probability score is between the predefined threshold probability score (e.g., 0.5 - 0.75).

Further, the knowledge graph building unit 210 may store the generated knowledge graph in the knowledge graph database 226 inside the data storage 216. Once the knowledge graph is stored in the knowledge graph database 226, the knowledge graph building unit 210 may notify the user about the generation of the knowledge graph via the user interface 206, so that the user may provide a query.

Once the knowledge graph is stored in the knowledge graph database 226, the knowledge graph bot 212 may be ready for deployment. The knowledge graph bot 212 may be a knowledge-graph-assisted LLM chat bot. Further, the process 700 may include identifying, by the knowledge graph bot 212, relevant nodes from the knowledge graph based on a user query utilizing the LLM 224, at step 708. The knowledge graph bot 212 may receive a user query from the user device through the user interface 206. The user may provide any query corresponding to the subject. In continuation with the above example, the user may provide the query "what are the top 4 factors that may influence `S&P 500' to go high in coming weeks or months?" to the knowledge graph bot 212 through the user interface 206.

Upon receiving the user query, the knowledge graph bot 212 may send a request for node metadata corresponding to each of the plurality of nodes of the knowledge graph to the knowledge graph database 226 inside the data storage 216. The node metadata may include the name and description of the nodes. Upon receiving the request, the knowledge graph database 226 may provide the node metadata corresponding to each of the plurality of nodes of the knowledge graph to the knowledge graph bot 212.

Upon receiving the node metadata of each of the plurality of nodes, the knowledge graph bot 212 may store (or cache) the node metadata corresponding to each of the plurality of nodes of the knowledge graph for the further use. It should be noted that storing the node metadata corresponding to each of the plurality of nodes may increase the efficiency of the knowledge graph bot 212 and may also be not required to send the request to the knowledge graph database 226 for each user query. Further, the knowledge graph bot 212 may create a node identification prompt. The node identification prompt may include the user query, the node metadata corresponding to each of the plurality of nodes of the knowledge graph, and instructions for the LLM unit 218 to identify a first set of relevant nodes corresponding to the user query. Further, the knowledge graph bot 212 may send the node identification prompt to the LLM unit 218.

By way of an example, an exemplary node identification prompt is shown below.
"content_var ="""
Below is a list of events in the format: Key, Name (name of event), Description of event (desc), Influence Strength.
There is a question at the end. Please list key names only based on the question.
Only emit keys in curly braces separated by comma. Example: {{key, key, key, ...}}
List of events:

```
{}
 Question:
 {}
 """.format(qatext, " what are the top 4 factors that may influence S&P to go high in coming
 weeks or month?")", qatext contains the metadata.
       
```

Upon receiving the node identification prompt, the LLM unit 218 may identify the first set of relevant nodes (i.e. only the 'keys' of the nodes) corresponding to the user query from the plurality of nodes based on the node identification prompt using the LLM 224. Upon identifying the first set of relevant nodes, the LLM unit 218 may send the first set of relevant nodes to the knowledge graph bot 212. By way of an example, the LLM unit 218 may respond to the knowledge graph bot 212 with the 'keys' of the node which are relevant to the target concept.
"First few lines of qatext:
key:Interestratecutsexpected, name: Interest rate cuts expected, desc:Predictions of Federal Reserve lowering rates, Influence Strength: Strong
key:Robustcorporateprofits, name: Robust corporate profits, desc: Strong earnings driving market optimism, Influence Strength: Medium
key:Inflationcooling, name: Inflation cooling, desc:Inflation rates moving towards target, Influence Strength: Strong
key:AIdriventechrally, name: AI driven tech rally, desc:NVIDIA and AMD saw triple digit gains, Influence Strength: Strong"

Once the first set of relevant nodes is received, the process 700 may include creating, by the knowledge graph bot 212, a list of summaries corresponding to the user query using the LLM 224 and the RAG model 222, at step 710. The knowledge graph bot 212 may render the knowledge graph on the user device via the user interface 206. The first set of relevant nodes and a path of each of the first set of relevant nodes to a target concept node are highlighted using the automatically created cypher queries in the rendered knowledge graph. By way of an example, the knowledge graph bot 212 may use a shortest path algorithm (such as a `Dijkstra path') from the first set of relevant nodes to the target concept node.

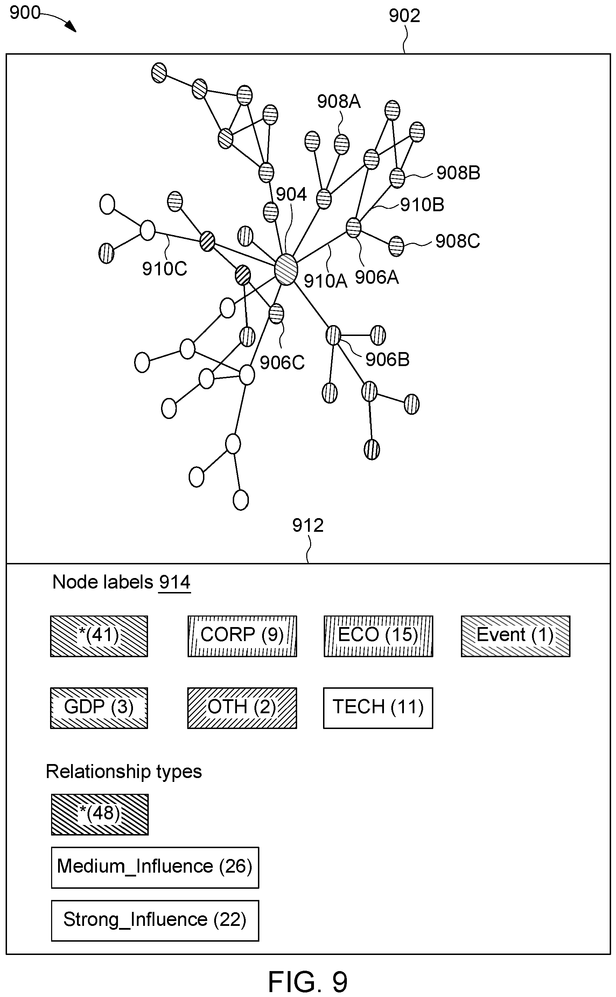

The path may include intermediary nodes, one or more associated edges between each of the first set of relevant nodes and the target concept node. It should be noted that all the nodes (such as the intermediary nodes) in between the first set of relevant nodes to the target concept node may also be highlighted as they are being indirectly influenced by these nodes. The intermediary nodes may also be known as a related node. The knowledge graph bot 212 may also identify neighbouring nodes that may be pointing towards the related nodes for the additional intelligence. In some embodiments, these nodes may also be referred to as child nodes. This is explained in greater detail in conjunction with FIG. 9.

Further, the knowledge graph bot 212 may send the user query along with the first set of relevant nodes (only the keys of the nodes) to the knowledge graph database 226 inside the data storage 216. Further, the knowledge graph bot 212 may retrieve the node metadata of each of a second set of relevant nodes. The second set of relevant nodes may include the first set of relevant nodes, the intermediary nodes, neighboring nodes associated with the intermediary nodes. The second set of relevant nodes may also be known as active nodes. By way of an example, the active nodes may be, USGDPresilience, Bullmarketterritory entry, FederalReserveratecuts, AIcrazefuelingtechrally. Upon receiving the second set of relevant nodes, the knowledge graph bot 212 may generate a prompt to get the details of the second set of relevant nodes from the RAG unit 208. The prompt may include metadata (i.e., name and description) corresponding to the second set of relevant nodes.

By way of an example, an exemplary prompt below may be generated by the knowledge graph bot 212.

```
 "active_nodes=containing list of nodes for which we want to get more information from
 RAG
 text=" "
 for i in active_nodes:
       text += "name of event: " + Gnodes_post[i]['name'] +', description: ' +
       Gnodes_post[i]['desc'] + "\n"
 content_var="""
       Please search in the context the details of following events and then create summary
       of each event and a combined summary.
```

At the end, also emit only a Sentiment score, between 0 to 1, based on the context to indicate probability of {}.
Events: {}
The output should be strictly less than 400 words.

```
""".format( target['name'], text)"
```

Upon generating the prompt, the knowledge graph bot 212 may send the prompt to the RAG unit 208. Once the prompt is received, the RAG unit 208 may create a plurality of metadata embeddings corresponding to the metadata of the second set of relevant nodes. Further, the RAG unit 208 may identify a relevant set of plurality of embeddings from the RAG model 222 based on the plurality of metadata embeddings using the cosine similarity.

Further, the RAG unit 208 may add the relevant set of plurality of embeddings to the prompt to create a summary generation prompt. The summary generation prompt may include the relevant set of plurality of domain embeddings, and the metadata of the second set of relevant nodes. Further, the RAG unit 208 may send the summary generation prompt to the LLM unit 218.

Upon receiving the summary generation prompt, the LLM unit 218 may generate a response to the user query based on the summary generation prompt using the LLM 224. The response may include the list of summaries corresponding to the second set of relevant nodes. Once the response is generated, the LLM unit 218 may send the response to the RAG unit 208. Further, the RAG unit 208 may send the response to the knowledge graph bot 212. Further, the knowledge graph bot 212 may render the response (e.g. list of summaries) on the user device through the user interface 206.

In continuation with the above example, an exemplary response (i.e., the list of summaries) generated by the knowledge graph bot 212 based on the target concept (e.g. `S&P 500') may be rendered as follows.
1. U.S. GDP Resilience: In late 2022, the U.S. GDP demonstrated signs of resilience, indicating economic strength. This resilience was a key factor behind forecasts that dismissed the likelihood of an imminent recession. The rebound in real disposable personal income and the overall robustness of the U.S. GDP were highlighted as significant drivers, suggesting a strong economic foundation despite tighter financial conditions.
2. Bull Market Territory Entry: The S&P 500 entered bull market territory; a significant event marked by the index rising more than 20% from its most recent low. This transition was further solidified when the S&P 500 surpassed its previous high, indicating a robust recovery and positive market sentiment. This bull market status was achieved after the index climbed to a new all-time high, reflecting investor confidence and a strong market performance in 2023.
3. Federal Reserve Rate Cuts: Investors were buoyed by the anticipation that the Federal Reserve might cut interest rates within the year, a move that could lower borrowing costs and stimulate economic activity. This expectation contributed to a more optimistic outlook for the market, as lower interest rates typically encourage investment in stocks over fixed-income assets, potentially lifting the stock market.
4. AI Craze Fuelling Tech Rally: The excitement around advancements in artificial intelligence significantly fuelled a rally in technology stocks, particularly within the semiconductor sector. Companies like NVIDIA and AMD saw notable gains, driven by the AI craze. This surge in technology stocks, especially those related to AI, played a crucial role in the overall market performance, with the Information Technology sector experiencing a substantial rally.

### Sentiment Score: 0.85

This sentiment score reflects a high probability of the S&P 500 reaching new highs, based on the resilience of the U.S. economy, entry into bull market territory, anticipated Federal Reserve rate cuts, and the significant impact of the AI-driven tech rally.

Creating additional insights from graph structure.

### Additional Insights:

AI Craze Fuelling Tech Rally Driven By:
- The "Magnificent Seven" tech stocks, including AI-focused companies, significantly outperforming the market, indicating a broader tech rally.
- The growing adoption of AI technologies and increased investment in AI-driven companies, highlighting the sector's potential for transformative gains.
- Nvidia's significant market share in AI chips and leading performance in AI benchmarks have solidified its position, driving investor interest.

Bull Market Territory Entry Driven By:
- More than a dozen companies in the S&P 500 reported strong quarterly results, contributing to market confidence.
- Slowing economic growth suggests a shift towards safer investments like bonds, but also sets the stage for market rallies on any positive news.
- As inflation cools, it creates a more stable economic environment, potentially encouraging investment in equities.
- The Federal Reserve suggests they will cut rates this year, influencing lower yields and potentially boosting market confidence.

Federal Reserve Rate Cuts Driven By:
- Elevated mortgage and debt refinancing costs leading to tighter credit and reduced spending, indirectly supporting savings.
- The document describes a scenario where inflation is declining and economic conditions, such as labour market tightness, are easing, potentially influencing the Federal Reserve's decision on rate cuts.
- Global inflation falling faster than anticipated, easing the cost of living and enhancing purchasing power.

Semiconductor Industry Optimism Driven By:
- The S&P 500's momentum through the first seven months was fuelled by robust economic growth, positively impacting the tech sector including semiconductors.
- The Federal Reserve signalling a prolonged period of elevated interest rates, yet the tech sector, including semiconductors, managed to perform well despite this.
- Inflation cooling throughout the year, creating a more favourable economic environment for growth in the tech sector, including semiconductors.
- The AI craze contributing significantly to the rally in technology stocks, including semiconductors, with notable gains in companies like NVIDIA and AMD.

U.S. GDP Resilience Driven By:
- Elevated mortgage and debt refinancing costs leading to tighter credit and reduced spending, indirectly supporting savings.
- Global inflation falling faster than anticipated, easing the cost of living and enhancing purchasing power.
- The United States eased fiscal policy more than other economies in 2023, potentially supporting GDP resilience through increased government spending and economic stimulus.
- Global growth projected to remain stable, with the United States showing stronger than expected growth, indicating underlying economic resilience.

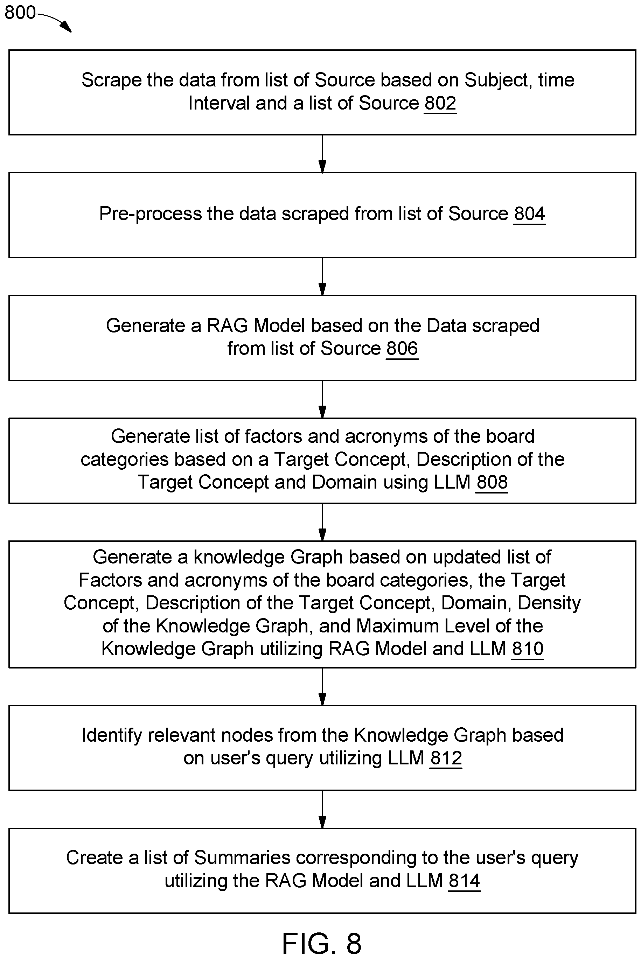

Referring now to FIG. 8, another detailed exemplary process 800 for generating target concept-based knowledge graph is illustrated via a flow chart, in accordance with some embodiments of the present disclosure. The process 800 may be implemented by the target concept analyzer 102 of the system 100. FIG. 8 is explained in conjunction with FIGS. 2 - 7. In an embodiment, the process 800 may include scrapping, by the news fetching unit 304, a set of data from various sources based on a subject, time interval, and a list of sources, at step 802. Initially, the news fetching unit 804, may receive the subject, the time interval, and the list of data sources from the user device via the user interface 206. The user interface 206 may receive the subject (e.g. S&P 500 Index, economic outlook, and the like), the time interval (e.g. last 30 days), and the list of data sources (e.g. google news, one or more reports, and the like) from the user previously. In some embodiment, the user may directly provide the list of data sources in a text box inside the user interval 206. The user may provide all the links relevant to the subject to the user interface. In some other embodiments, links may be chosen from a dropdown list.

Further, the news fetching unit 304 may send a request to various data sources within the list of data sources to scrape the set of data relevant to the subject for the given time interval. The data sources may respond with the web pages to the news fetching unit 304. Once the set of data is scraped, the news fetching unit 304 may send the set of data relevant to the subject to the data pre-processing unit 306.

By way of an example, the user may provide the subject (e.g. `S&P 500'), the list of data sources (e.g. google news data with the query `S&P 500 Index' for January 2024) may be retrieved. Additionally, one or more reports from IMF.org, etc. about the global economic outlook and regional outlook, from January 2024, may also be included.

Once the set of data and the subject is received, the process 800 may include pre-processing the set of data scraped from the list of data sources, at step 804. The data pre-processing unit 306 may pre-process the set of data to remove non-ascii and control characters (if any) by using regular expression. Further, the data pre-processing unit 306 may create a pre-processed consolidated file (e.g. PDF file) corresponding to the set of data from various sources and the subject. Further, the data pre-processing unit 306 may send the pre-processed consolidated file to the RAG unit 208.

Upon receiving the pre-processed consolidated file, the RAG unit 208 may create a plurality of pre-processed consolidated file chunks (or tokens) corresponding to the scraped set of data. Further, the RAG unit 208 may create a plurality of embeddings corresponding to the plurality of pre-processed consolidated file chunks. Upon creating the plurality of chunks, the RAG unit 208 may store the plurality of embeddings in the data storage 214 to obtain the RAG model 222. Further, rest of the process may be same as already explained in the FIG. 7.

Referring now to FIG. 9, a representation 900 of a knowledge graph is illustrated, in accordance with some embodiment of the present disclosure. The representation 900 may include a knowledge graph 902. The knowledge graph 902 may include a plurality of nodes and a plurality of edges. The knowledge graph 902 may include a target concept node 904 (e.g. `S&P 500 high'). The knowledge graph 902 may further include a plurality of event nodes and a plurality of sub-event nodes. Nodes 906A, 906B, and 906C may, for example, represent the plurality of event nodes in the knowledge graph 902. It should be noted that the plurality of event nodes may be the nodes which are directly linked with the target concept node 904. Nodes 908A, 908B, and 908C may, for example, represent the plurality of sub-event nodes on the knowledge graph 902.

The knowledge graph 902 may further include a plurality of edges (such as edges 910A, 910B, and 910C). Each of the plurality of edges may represent a relationship type between two of the plurality of nodes. The relationship type may include a `medium influence' and a 'strong influence'. By way of an example, the knowledge graph building unit 902 may include '26' number of `medium influence, and '22' number of 'strong influence'.

The representation 900 may further include an overview chart 912. By way of an example, the overview chart 912 may be presented adjacent to the knowledge graph 902. The overview chart 912 may include node labels 914. The node labels 914 may include acronyms of the broad categories corresponding to the target concept. Each acronym of the broad categories influencing the target concept may be represented with the different colours. By way of an example, `CORP' may be represented with the `red colour', Similarly, `ECO' with the `purple colour', 'GDP' with `gray colour', 'OTH' with `yellow colour', and 'TECH' with `green colour'. By way of an example, the knowledge graph 902 may include '41' number of nodes. In which '9' nodes may correspond to (CORP), ` 15' nodes may correspond to Economic Corporation Organization (ECO), '3' nodes may correspond to Gross Domestic Product (GDP), '2' nodes may correspond to other categories (OTH), and '11' nodes may correspond to (TECH). It should be noted that the number of nodes may be in hundreds or thousands depending on the problem.

As will be also appreciated, the above-described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

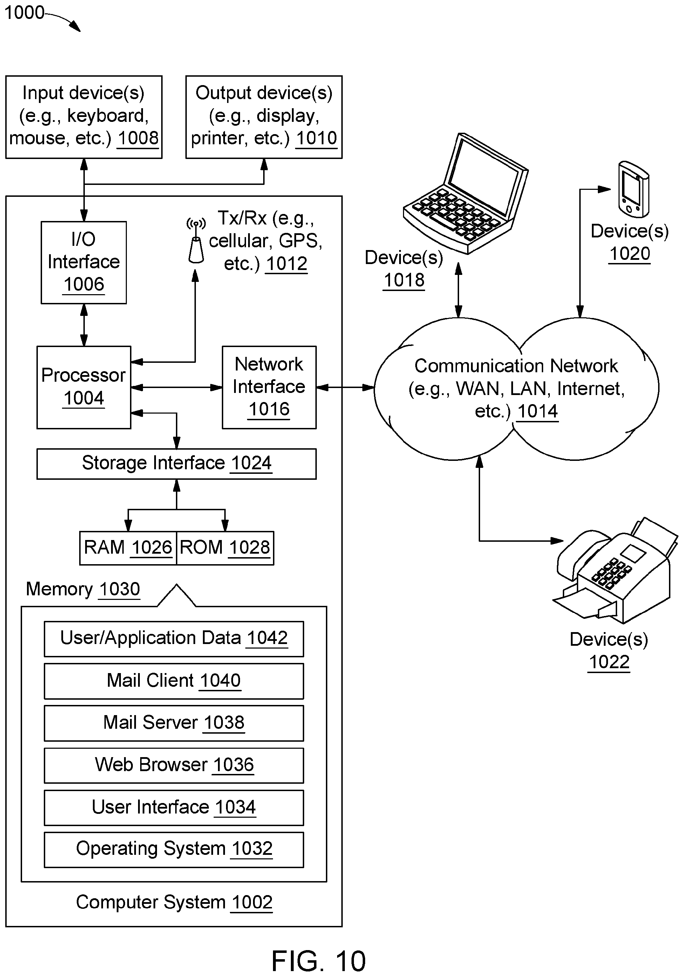

The disclosed methods and systems may be implemented on a conventional or a general-purpose computer system, such as a personal computer (PC) or server computer. Referring now to FIG. 10, a block diagram of an exemplary computer system 1002 for implementing embodiments consistent with the present disclosure is illustrated. Variations of computer system 1002 may be used for implementing system 100 for generating target concept-based knowledge graphs. The computer system 1002 may include a central processing unit ("CPU" or "processor") 1004. The processor 1004 may include at least one data processor for executing program components for executing user-generated or system-generated requests. A user may include a person, a person using a device such as such as those included in this disclosure, or such a device itself. The processor 1004 may include specialized processing units such as integrated system (bus) controllers, memory management control units, floating point units, graphics processing units, digital signal processing units, etc. The processor 1004 may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor or other line of processors, etc. The processor 1004 may be implemented using mainframe, distributed processor, multicore, parallel, grid, or other architectures. Some embodiments may utilize embedded technologies like application-specific integrated circuits (ASICs), digital signal processors (DSPs), Field Programmable Gate Arrays (FPGAs), etc.

The processor 1004 may be disposed in communication with one or more input/output (I/O) devices via I/O interface 1006. The I/O interface 1006 may employ communication protocols/methods such as, without limitation, audio, analog, digital, monoaural, RCA, stereo, IEEE-1394, near field communication (NFC), FireWire, Camera Link^{®}, GigE, serial bus, universal serial bus (USB), infrared, PS/2, BNC, coaxial, component, composite, digital visual interface (DVI), high-definition multimedia interface (HDMI), radio frequency (RF) antennas, S-Video, video graphics array (VGA), IEEE 802.n /b/g/n/x, Bluetooth, cellular (e.g., code-division multiple access (CDMA), high-speed packet access (HSPA+), global system for mobile communications (GSM), long-term evolution (LTE), WiMAX, or the like), etc.

Using the I/O interface 1006, the computer system 1002 may communicate with one or more I/O devices. For example, the input device 1008 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 1010 may be a printer, fax machine, video display (e.g., cathode ray tube (CRT), liquid crystal display (LCD), light-emitting diode (LED), plasma, or the like), audio speaker, etc. In some embodiments, a transceiver 1612 may be disposed in connection with the processor 1004. The transceiver may facilitate various types of wireless transmission or reception. For example, the transceiver may include an antenna operatively connected to a transceiver chip (e.g., TEXAS INSTRUMENTS^{®} WILINK WL1286^{®}, BROADCOM^{®} BCM4550IUB8^{®}, INFINEON TECHNOLOGIES^{®} X-GOLD 1436-PMB9800^{®} transceiver, or the like), providing IEEE 802.11a/b/g/n, Bluetooth, FM, global positioning system (GPS), 2G/3G HSDPA/HSUPA communications, etc.

In some embodiments, the processor 1004 may be disposed in communication with a communication network 1016 via a network interface 1014. The network interface 1014 may communicate with the communication network 1016. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 1016 may include, without limitation, a direct interconnection, local area network (LAN), wide area network (WAN), wireless network (e.g., using Wireless Application Protocol), the Internet, etc. Using the network interface 1014 and the communication network 1016, the computer system 1002 may communicate with devices 1018, 1020, and 1022. These devices may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX^{®}, NINTENDO^{®} DS^{®}, SONY^{®} PLAYSTATION^{®}, etc.), or the like. In some embodiments, the computer system 1002 may itself embody one or more of these devices.

In some embodiments, the processor 1004 may be disposed in communication with one or more memory devices 1030 (e.g., RAM 1026, ROM 1028, etc.) via a storage interface 1024. The storage interface may connect to memory devices 1030 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-485, I2C, SPI, Microwire, 1-Wire, IEEE 1284, Intel^{®} QuickPathInterconnect, InfiniBand, PCIe, etc. The memory drives may further include a drum, magnetic disc drive, magneto-optical drive, optical drive, redundant array of independent discs (RAID), solid-state memory devices, solid-state drives, etc.

The memory devices 1030 may store a collection of program or database components, including, without limitation, an operating system 1032, user interface application 1034, web browser 1036, mail server 1038, mail client 1040, user/application data 1042 (e.g., any data variables or data records discussed in this disclosure), etc. The operating system 1032 may facilitate resource management and operation of the computer system 1002. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8, etc.), APPLE^{®} IOS^{®}, GOOGLE^{®} ANDROID^{®}, BLACKBERRY^{®} OS, or the like. User interface 1034 may facilitate display, execution, interaction, manipulation, or operation of program components through textual or graphical facilities. For example, user interfaces may provide computer interaction interface elements on a display system operatively connected to the computer system 1002, such as cursors, icons, check boxes, menus, scrollers, windows, widgets, etc. Graphical user interfaces (GUIs) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO^{®}, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 1002 may implement a web browser 1036 stored program component. The web browser may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTMI,, ADOBE^{®} FLASH^{®}, JAVASCRIPT^{®}, JAVA^{®}, application programming interfaces (APIs), etc. In some embodiments, the computer system 1002 may implement a mail server 1038 stored program component. The mail server may be an Internet mail server such as MICROSOFT^{®} EXCHANGE^{®}, or the like. The mail server may utilize facilities such as ASP, ActiveX, ANSI C++/C#, MICROSOFT NET^{®} CGI scripts, JAVA^{®}, JAVASCRIPT^{®}, PERL^{®}, PHP^{®}, PYTHON^{®}, WebObjects, etc. The mail server may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 1002 may implement a mail client 1040 stored program component. The mail client may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, computer system 1002 may store user/application data 1042, such as the data, variables, records, etc. (e.g., a RAG model, knowledge graphs, instructions for an LLM, a plurality of domain embeddings, a plurality of target concept embeddings, and the like) as described in this disclosure. Such databases may be implemented as fault-tolerant, relational, scalable, secure databases such as ORACLE^{®} OR SYBASE^{®}. Alternatively, such databases may be implemented using standardized data structures, such as an array, hash, linked list, struct, structured text file (e.g., XML), table, or as object-oriented databases (e.g., using OBJECTSTORE^{®}, POET^{®}, ZOPE^{®}, etc.). Such databases may be consolidated or distributed, sometimes among the various computer systems discussed above in this disclosure. It is to be understood that the structure and operation of the any computer or database component may be combined, consolidated, or distributed in any working combination.

Various embodiments provide method and system for generating target concept-based knowledge graphs. The disclosed method and system may receive input data from a user device. The input data may include a target concept, and a set of target concept parameters. Further, the disclosed method and system may generate a factor-category list. The factor-category list may include a plurality of factors, each associated with one of a set of categories, based on the input data using a Large Language Model (LLM). Further, the disclosed method and system may create a plurality of target concept embeddings from the input data and the factor-category list using an embedding model. Further, the disclosed method and system may identify a relevant set of a plurality of domain embeddings from a Retrieval Augmented Generation (RAG) model based on a similarity analysis of the plurality of target concept embeddings with the plurality of domain embeddings. Moreover, the disclosed method and system may provide a knowledge graph generation prompt to the LLM. The knowledge graph generation prompt may include the input data, the factor-category list, the relevant set of the plurality of domain embeddings, a set of predefined knowledge graph parameters, and a set of LLM instructions. Thereafter, the disclosed method and system may recursively generate a knowledge graph based on the knowledge graph generation prompt, using the LLM. The knowledge graph may include a plurality of nodes and a plurality of edges. Each of the plurality of nodes corresponds to one of an event or a sub-event and is associated with one of the set of categories. Each of the plurality of edges corresponds to a relationship type between two of the plurality of nodes.

Thus, the disclosed method and system try to overcome the technical problem of generating target concept-based knowledge graphs. The disclosed method and system mainly focus on a target concept and building a relation around the target concept with a dynamic ontology creation in each level of a knowledge graph. This may help to identify factors associated with the target concept in a robust manner without dilution of the information in each level. The disclosed method and system may generate the knowledge graph in which nodes may not be only entities but also abstract concepts. This may help to define the target concept more accurately. The disclosed method and system may include a temporal knowledge graph. The temporal knowledge graph may provide deeper insights into the factors influencing the target concept and their contextual changes concerning dependent nodes at each level. The disclosed method and system may have feature of temporal knowledge graph with the target concept which may help to compare the factors which change in knowledge graph over a period. The disclosed method and system may provide a knowledge graph bot that utilizes structure in the knowledge graph to provide better meaningful responses to the user query.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for generating target concept-based knowledge graphs, the method comprising:
receiving, by a target concept analyzer via a Graphical User Interface, GUI, input data from a user device, wherein the input data comprises a target concept, and a set of target concept parameters;
generating, by the target concept analyzer, a factor-category list comprising a plurality of factors, each associated with one of a set of categories, based on the input data using a Large Language Model, LLM;
creating, by the target concept analyzer, a plurality of target concept embeddings from the input data and the factor-category list using an embedding model;
identifying, by the target concept analyzer, a relevant set of a plurality of domain embeddings from a Retrieval Augmented Generation, RAG, model based on a similarity analysis of the plurality of target concept embeddings with the plurality of domain embeddings;
providing, by the target concept analyzer, a knowledge graph generation prompt to the LLM, wherein the knowledge graph generation prompt comprises the input data, the factor-category list, the relevant set of the plurality of domain embeddings, a set of predefined knowledge graph parameters, and a set of LLM instructions; and
recursively generating, by the target concept analyzer, a knowledge graph based on the knowledge graph generation prompt, using the LLM, wherein:
the knowledge graph comprises a plurality of nodes and a plurality of edges,
each of the plurality of nodes corresponds to one of an event or a sub-event and is associated with one of the set of categories, and
each of the plurality of edges corresponds to a relationship type between two of the plurality of nodes.

2. The method of claim 1, further comprising:
receiving, by the target concept analyzer, domain-specific data from the user device or data sources;
creating, by the target concept analyzer, the plurality of domain embeddings corresponding to domain-specific data; and
storing, by the target concept analyzer, the plurality of domain embeddings in a RAG database to obtain the RAG model.

3. The method of claim 1 or claim 2, further comprising:
receiving, by the target concept analyzer, target concept query from the user device;
creating, by the target concept analyzer, a plurality of target concept embeddings from the target concept query;
identifying, by the target concept analyzer, a relevant set of the plurality of domain embeddings corresponding to the plurality of target concept embeddings based on a similarity analysis;
providing, by the target concept analyzer, a target concept determination prompt to the LLM, wherein the target concept determination prompt comprises the target concept query and the relevant set of the plurality of domain embeddings; and
determining, by the target concept analyzer, a target concept using the LLM based on the target concept determination prompt.

4. The method of any of claims 1-3, further comprising:
receiving, by the target concept analyzer via the GUI, a user feedback indicative of a modification to the factor-category list; and
modifying, by the target concept analyzer, the factor-category list based on the user feedback.

5. The method of any of claims 1-4, wherein recursively generating the knowledge graph comprises:
for each recursion,
generating, by the target concept analyzer, a plurality of events or sub-events and event data of each of the plurality of events or sub-events, using the LLM in response to the knowledge graph generation prompt, wherein for each of the plurality of events or sub-events, the event data comprises a probability score indicative of a relevance of an event or sub-event to the target concept;
comparing, by the target concept analyzer, the probability score of each of the plurality of events or sub-events with a predefined threshold probability score;
selecting, by the target concept analyzer, a set of events or sub-events from the plurality of events or sub-events based on the comparison; and
for each of the plurality of events or sub-events, determining, by the target concept analyzer, a hierarchical level and a list of associated events; and
generating, by the target concept analyzer, the knowledge graph based on the event data, the hierarchical level, and the list of associated events, wherein each of the plurality of events or sub-events is represented as a node in the knowledge graph.

6. The method of claim 5, further comprising:
for each of the plurality of nodes, storing, by the target concept analyzer, the event data, the hierarchical level, and the list of associated events in a global data structure;
for a new node, comparing, by the target concept analyzer, at least one element of the event data of the new node with the corresponding at least one element of the event data of each of the plurality of nodes; and, one of:
adding, by the target concept analyzer, the new node to the knowledge graph based on an unsuccessful comparison; or
appending, by the target concept analyzer, the list of associated events of the new node with the list of associated events of a matching node from the plurality of nodes based on a successful comparison.

7. The method of any of claims 1-6, further comprising:
receiving, by the target concept analyzer, a user query from the user device;
providing, by the target concept analyzer, a node identification prompt to the LLM, wherein the node identification prompt comprises the user query and node metadata corresponding to each of the plurality of nodes of the knowledge graph; and
identifying, by the target concept analyzer, a first set of relevant nodes corresponding to the user query from the plurality of nodes based on the node identification prompt using the LLM.

8. The method of claim 7, further comprising rendering, by the target concept analyzer and via the GUI, the knowledge graph on the user device, wherein the first set of relevant nodes and a path of each of the first set of relevant nodes to a target concept node are highlighted in the rendered knowledge graph, and wherein the path comprises intermediary nodes and one or more associated edges between each of the first set of relevant nodes and the target concept node.

9. The method of claim 8, further comprising:
retrieving, by the target concept analyzer, the node metadata of each of a second set of relevant nodes, wherein the second set of relevant nodes comprises the first set of relevant nodes, the intermediary nodes, and neighbouring nodes pointing to each of the first set of relevant nodes and each of the intermediary nodes;
creating, by the target concept analyzer, a plurality of metadata embeddings based on the retrieved node metadata;
determining, by the target concept analyzer, a relevant set of the plurality of domain embeddings from the RAG model based on the plurality of metadata embeddings through a similarity analysis;
providing, by the target concept analyzer, a summary generation prompt to the LLM, wherein the summary generation prompt comprises the relevant set of the plurality of domain embeddings and the node metadata of each of a second set of relevant nodes; and
generating, by the target concept analyzer, a response to the user query based on the summary generation prompt using the LLM, wherein the response comprises a list of summaries corresponding to the second set of relevant nodes.

10. A system for generating target concept-based knowledge graphs, the system comprising:
a processor; and
a memory communicatively coupled to the processor, wherein the memory stores processor executable instructions, which, on execution, causes the processor to perform the method according to any of claims 1-9.

11. A non-transitory computer-readable medium storing computer-executable instructions for generating target concept-based knowledge graphs, the computer-executable instructions configured to cause a processor to perform the method according to any of claims 1-9.
